# EUROPÄISCHE PATENTSCHRIFT

(11) **EP 3 622 207 B1**
(45) Veröffentlichungstag und Bekanntmachung des Hinweises auf die Patenterteilung: **10.03.2021**
(21) Anmeldenummer: 18709497.4
(22) Anmeldetag: 27.02.2018
(51) Int. Cl.: F16K 11/10, F16K 11/22, F16K 11/24, B60K 15/035, F02M 25/08, B60K 15/03

(54) **VENTILMODUL**
VALVE MODULE
MODULE DE VANNE

(30) Priorität: 08.05.2017 DE 102017207747
(43) Veröffentlichungstag der Anmeldung: 18.03.2020
(73) Patentinhaber: Kautex Textron GmbH & Co. KG, 53229 Bonn (DE)
(72) Erfinder: KOUKAN, Ibrahim, 50999 Köln (DE); WIND, Stefan, 53773 Hennef (DE); WEISS, Gernot, 53819 Neunkirchen (DE); BARKOW, Axel, 50354 Hürth (DE); EULITZ, Dirk, 53115 Bonn (DE)
(74) Vertreter: Richly & Ritschel Patentanwälte PartG mbB
(86) Internationale Anmeldenummer: PCT/EP2018/054789
(87) Internationale Veröffentlichungsnummer: WO 2018/206176

(56) Entgegenhaltungen:
- DE-A1- 19 901 080
- DE-A1-102012 213 955
- US-A1- 2008 105 329
- US-A1- 2014 197 188

## Beschreibung

Die vorliegende Erfindung betrifft ein Ventilmodul für ein Betriebsflüssigkeitsbehältersystem. Ferner betrifft die vorliegende Erfindung ein Betriebsflüssigkeitsbehältersystem.

Im Folgenden wird auf als Kraftstoffbehälter bzw. als Kraftstofftanks ausgebildete Betriebsflüssigkeitsbehälter und auf als Kraftstoffbehältersysteme ausgebildete Betriebsflüssigkeitsbehältersysteme Bezug genommen. Betriebsflüssigkeitsbehälter im Sinne der Erfindung sind insbesondere aber nicht ausschließlich Kraftstoffbehälter (für Ottokraftstoffe oder Dieselkraftstoffe), Harnstoffbehälter, Wischwasserbehälter, Ölbehälter, Nebenflüssigkeitsbehälter oder Additivbehälter jeweils für Kraftfahrzeuge

Einen solchen Kraftstoffbehälter zeigt beispielsweise die US2008105329 A1.

Aus dem Stand der Technik ist es bekannt, dass zum Entlüften eines Kraftstoffbehälters dieser zumindest ein Entlüftungsventil aufweist, das wiederum mit einer Entlüftungsleitung zum Ableiten des Überdrucks an die Atmosphäre fluidverbunden ist. Insbesondere bei für Ottokraftstoff ausgebildeten Kraftstoffbehältern sind deren Entlüftungsleitungen häufig mit Aktivkohlefiltern zum Durchleiten und Ausfiltern von Treibstoffdämpfen fluidverbunden. Die durch das Aktivkohlefilter gefilterten Gase werden nach Passieren des Aktivkohlefilters an die Atmosphäre abgegeben. Beim Betanken eines Kraftstoffbehälters befindet sich das Entlüftungsventil in dessen Offenstellung, damit beim Betanken aus dem Kraftstoffbehälter ausgetriebenes Gas (Kraftstoffdampf-Luft-Gemisch) an die Atmosphäre - gegebenenfalls durch ein Aktivkohlefilter gefiltert - abgeleitet werden kann. Ein Befüllstopp bzw. Betankungsstopp wird derart eingeleitet, dass das Entlüftungsventil durch den im Kraftstoffbehälter ansteigenden Kraftstoff verschlossen wird, wodurch ein Ableiten der sich im Kraftstoffbehälter befindlichen Gase/Dämpfe über das Entlüftungsventil unterbunden wird. Durch weiteres Einleiten von Kraftstoff über ein in den Kraftstoffbehälterinnenraum mündendes Einfüllrohr steigt der Druck innerhalb des Kraftstoffbehälters an, so dass auch ein Kraftstoffpegel innerhalb des Einfüllrohrs ansteigt, bis der Kraftstoffpegel ein in das Einfüllrohr eingestecktes Zapfventil verschließt, woraufhin seitens des Zapfventils ein Ausströmen von Kraftstoff beendet wird.

Die aus dem Stand der Technik bekannten Kraftstoffbehälter sind ferner üblicherweise über ein weiteres Ventil mit einem in den Kraftstoffbehälter mündenden Einfüllrohr fluidverbunden. Denn durch den in die Kraftstoffbehälter eingeleiteten Kraftstoff wird stets auch Luft in den Kraftstoffbehälter gezogen. Durch eine Fluidverbindung des Kraftstoffbehälters, im Genaueren des Kraftstoffbehälterinnenraums mit dem Einfüllrohr wird aus dem Kraftstoffbehälter ausgetriebenes Gas (Kraftstoffdampf-Luft-Gemisch) zurück in den Kraftstoffbehälter geleitet. Dieses Kraftstoff-Dampf-Gemisch ist gesättigt, so dass weniger Kraftstoff in die Dampfphase übergeht. Somit wird eine Beladung eines Aktivkohlefilters mit Kraftstoffdämpfen vermindert.

Zum Spülen eines Aktivkohlefilters ist dieses üblicherweise mittels eines Spülventils mit einem Ansaugtrakt einer Verbrennungskraftmaschine fluidverbunden.

In unterschiedlichen Ländern herrschen unterschiedliche Vorschriften hinsichtlich der Handhabung der beim Betanken aus dem Kraftstoffbehälter ausgetriebenen Dämpfe. So muss in gewissen Ländern der gesamte aus dem Kraftstoffbehälter ausgetriebene Dampf durch ein Aktivkohlefilter geleitet werden. In anderen Ländern wiederum können die aus dem Kraftstoffbehälter ausgetriebenen Gase über das Einfüllrohr an die Umgebung abgegeben werden, wo diese üblicherweise von einer Absaugeinrichung abgesaugt werden, wobei die Absaugeinrichtung Teil einer Befülleinrichtung, beispielsweise einer Befüllstation sein kann.

Der vorliegenden Erfindung liegt die Aufgabe zugrunde, ein Ventilmodul für ein Betriebsflüssigkeitsbehältersystem bereitzustellen, das für unterschiedliche Betriebsflüssigkeitssysteme geeignet ist. Ferner liegt der vorliegenden Erfindung die Aufgabe zugrunde, ein verbessertes Betriebsflüssigkeitsbehältersystem bereitzustellen.

Die der vorliegenden Erfindung zugrundeliegende Aufgabe wird durch ein Ventilmodul mit den Merkmalen des Anspruchs 1 gelöst. Vorteilhafte Ausgestaltungen des Ventilmoduls sind in den von Anspruch 1 abhängigen Ansprüchen beschrieben.

Ferner wird die der vorliegenden Erfindung zugrundeliegende Aufgabe durch ein Betriebsflüssigkeitsbehältersystem mit den Merkmalen des Anspruchs 15 gelöst. Vorteilhafte Ausgestaltungen des Betriebsflüssigkeitsbehältersystems sind in den von Anspruch 15 abhängigen Ansprüchen beschrieben.

Im Genaueren wird die der vorliegenden Erfindung zugrundeliegende Aufgabe durch ein Ventilmodul für ein Betriebsflüssigkeitsbehältersystem gelöst, das ein Gehäuse mit einem ersten Anschluss zur Fluidverbindung mit einem Betriebsflüssigkeitsbehälterinnenraum, einen zweiten Anschluss zur Fluidverbindung mit einem Einfüllrohr und einen dritten Anschluss zur zumindest mittelbaren Fluidverbindung mit der Atmosphäre aufweist. Das erfindungsgemäße Ventilmodul ist dadurch gekennzeichnet, dass der erste Anschluss innerhalb des Gehäuses jeweils mit dem zweiten Anschluss und dem dritten Anschluss fluidverbunden ist. Ferner ist der zweite Anschluss innerhalb des Gehäuses mit dem dritten Anschluss fluidverbunden. Das erfindungsgemäße Ventilmodul ist ferner dadurch gekennzeichnet, dass der erste Anschluss und der zweite Anschluss und der dritte Anschluss jeweils unabhängig voneinander jeweils zwischen einer Offenstellung, bei der eine Fluidkommunikation durch den jeweiligen Anschluss hindurch ermöglicht ist, und einer Schließstellung, bei der eine Fluidkommunikation durch den jeweiligen Anschluss hindurch unterbunden ist, verstellbar sind.

Das erfindungsgemäße Ventilmodul weist den Vorteil auf, dass alle Komponenten, die für eine Betankungsentlüftung und eine Betriebsentlüftung und für eine eventuelle Spülung eines Adsorptionsfilters notwendig sind, in einer Baugruppe vereinigt sind. Dadurch weist ein mit dem erfindungsgemäßen Ventilmodul ausgestattetes Betriebsflüssigkeitsbehältersystem einen einfacheren Aufbau auf und kann für unterschiedlich ausgebildete und konzipierte Betriebsflüssigkeitsbehältersysteme verwendet werden. So können beispielsweise Anschlüsse am Betriebsflüssigkeitsbehälter selber und an einem Adsorptionsfilter reduziert sein. Ein Betriebsflüssigkeitsbehälter eines Betriebsflüssigkeitsbehältersystems, welches das erfindungsgemäße Ventilmodul verwendet, benötigt lediglich nur noch einen einzigen Anschluss, der beispielsweise über ein Roll-Over-Ventil realisiert ist, der über eine Fluidleitung mit dem ersten Anschluss des Ventilmoduls verbunden ist, um unterschiedliche Betankungsentlüftungen (entweder Entlüftung der aus dem Betriebsflüssigkeitsbehälter ausgetriebenen Gase über ein Adsorptionsfilter und/oder über das Einfüllrohr) und eine Betriebsentlüftung zu ermöglichen.

Der erste Anschluss ist folglich dazu ausgebildet, mit einem Betriebsflüssigkeitsbehälterinnenraum fluidverbunden zu sein. Der erste Anschluss kann auch als Eingangsanschluss und/oder als Hauptanschluss und/oder als Tankanschluss des Ventilmoduls bezeichnet werden.

Der zweite Anschluss ist folglich dazu ausgebildet, mit einem Einfüllrohr fluidverbunden zu sein. Das Einfüllrohr mündet vorzugsweise in den Betriebsflüssigkeitsbehälterinnenraum und dient einer Befüllung des Betriebsflüssigkeitsbehälters mit einer Betriebsflüssigkeit. Der zweite Anschluss kann auch als Entlüftungsanschluss und/oder als Rezirkulationsanschluss bezeichnet werden.

Der dritte Anschluss ist folglich dazu ausgebildet, zumindest mittelbar mit der Atmosphäre fluidverbunden zu sein. Vorzugsweise ist der dritte Anschluss mittels eines Aktivkohlefilters mit der Atmosphäre fluidverbunden. Der dritte Anschluss kann auch als Filteranschluss bezeichnet werden.

Folglich sind die ersten, zweiten und dritten Anschlüsse miteinander fluidverbunden. Mit anderen Worten ist jeder der ersten, zweiten und dritten Anschlüsse mit jedem anderen der ersten, zweiten, dritten Anschlüsse fluidverbunden.

Betriebsflüssigkeitsbehälter im Sinne der Erfindung sind insbesondere aber nicht ausschließlich Kraftstoffbehälter (für Ottokraftstoffe oder Dieselkraftstoffe), Harnstoffbehälter, Wischwasserbehälter, Ölbehälter, Nebenflüssigkeitsbehälter oder Additivbehälter jeweils für Kraftfahrzeuge. Der Betriebsflüssigkeitsbehälter ist vorzugsweise als Kraftstoffbehälter ausgebildet. Das Betriebsflüssigkeitsbehältersystem ist vorzugsweise als Kraftstoffbehältersystem ausgebildet.

Vorzugsweise ist das Ventilmodul derart ausgebildet, dass zwischen dem ersten Anschluss und dem zweiten Anschluss eine erste Ventilvorrichtung angeordnet ist, die mit dem ersten Anschluss und dem zweiten Anschluss fluidverbunden ist, wobei die erste Ventilvorrichtung zwischen einer Offenstellung, in der ein Fluidfluss zwischen dem ersten Anschluss und dem zweiten Anschluss durch die erste Ventilvorrichtung ermöglicht ist, und einer Schließstellung, in der ein Fluidfluss zwischen dem ersten Anschluss und dem zweiten Anschluss durch die erste Ventilvorrichtung unterbunden ist, betätigbar ist. Ferner ist zwischen dem ersten Anschluss und dem dritten Anschluss eine zweite Ventilvorrichtung angeordnet, die mit dem ersten Anschluss und dem dritten Anschluss fluidverbunden ist, wobei die zweite Ventilvorrichtung zwischen einer Offenstellung, in der ein Fluidfluss zwischen dem ersten Anschluss und dem dritten Anschluss durch die zweite Ventilvorrichtung ermöglicht ist, und einer Schließstellung, in der ein Fluidfluss zwischen dem ersten Anschluss und dem dritten Anschluss durch die zweite Ventilvorrichtung unterbunden ist, betätigbar ist.

Durch entsprechendes Öffnen und Schließen der ersten Ventilvorrichtung und/oder der zweiten Ventilvorrichtung lassen sich der erste Anschluss beliebig mit dem zweiten Anschluss und/oder dem dritten Anschluss beliebig verbinden. Selbiges gilt für eine Fluidverbindung zwischen dem zweiten Anschluss und dem dritten Anschluss.

Vorzugsweise ist das Ventilmodul derart ausgebildet, dass die erste Ventilvorrichtung zumindest zwei erste Ventileinrichtungen aufweist, die miteinander parallel fluidverbunden sind, wobei jede erste Ventileinrichtung zwischen einer Offenstellung und einer Schließstellung betätigbar ist.

Durch eine entsprechende Ausbildung des Ventilmoduls ist es auf eine einfache Art ermöglicht, dass durch entsprechende Betätigung bzw. Verstellung einzelner erster Ventileinrichtungen zwischen deren Offenstellung und deren Schließstellung ein Strömungswiderstand zwischen dem ersten Anschluss und dem zweiten Anschluss eingestellt werden kann. Somit lässt sich das Ventilmodul auf eine einfache Art an die entsprechenden Betriebszustände eines Betriebsflüssigkeitsbehältersystems anpassen.

Vorzugsweise ist das Ventilmodul derart ausgebildet, dass die zumindest zwei ersten Ventileinrichtungen voneinander verschiedene freie Öffnungsquerschnittsflächen aufweisen.

Unter der freien Öffnungsquerschnittsfläche ist erfindungsgemäß insbesondere die freie Öffnungsqueschnittsfläche eines Ventilsitzes der ersten Ventileinrichtung zu verstehen.

Vorzugsweise ist das Ventilmodul derart ausgebildet, dass die zweite Ventilvorrichtung zumindest zwei zweite Ventileinrichtungen aufweist, die miteinander parallel fluidverbunden sind, wobei jede zweite Ventileinrichtung zwischen einer Offenstellung und einer Schließstellung betätigbar ist.

Durch eine entsprechende Ausbildung des Ventilmoduls ist es auf eine einfache Art ermöglicht, dass durch entsprechende Betätigung bzw. Verstellung einzelner zweiter Ventileinrichtungen zwischen deren Offenstellung und deren Schließstellung ein Strömungswiderstand zwischen dem ersten Anschluss und dem dritten Anschluss eingestellt werden kann. Somit lässt sich das Ventilmodul auf eine einfache Art an die entsprechenden Betriebszustände eines Betriebsflüssigkeitsbehältersystems anpassen.

Vorzugsweise ist das Ventilmodul derart ausgebildet, dass die zumindest zwei zweiten Ventileinrichtungen voneinander verschiedene freie Öffnungsquerschnittsflächen aufweisen.

Unter der freien Öffnungsquerschnittsfläche ist erfindungsgemäß insbesondere die freie Öffnungsqueschnittsfläche eines Ventilsitzes der zweiten Ventileinrichtung zu verstehen.

Die jeweiligen ersten Ventileinrichtungen und/oder zweiten Ventileinrichtungen können insbesondere als lineare Magnetventile mit einem Stößel und/oder als Drehmagnet-Ventile ausgebildet sein. Ferner können die jeweiligen ersten Ventileinrichtungen und/oder zweiten Ventileinrichtungen als Stellmotor- bzw. Schrittmotor-Ventile ausgebildet sein, die weiter vorzugsweise eine Nockenwelle oder einen Drehzylinder oder einen Spindelantrieb aufweisen. Ferner können die jeweiligen ersten Ventileinrichtungen und/oder zweiten Ventileinrichtungen auf dem Formgedächtnisprinzip basieren. Ferner können die jeweiligen ersten Ventileinrichtungen und/oder zweiten Ventileinrichtungen mittels eines Piezokristalls und/oder mittels Wanderwellen zwischen deren Offenstellung und deren Schließstellung betätigbar sein. Begrenzungen hinsichtlich der Ausführungen der jeweiligen ersten Ventileinrichtungen und/oder zweiten Ventileinrichtungen bestehen daher keine.

Vorzugsweise ist das Ventilmodul derart ausgebildet, dass die erste Ventilvorrichtung und/oder die zweite Ventilvorrichtung elektrisch zwischen der Offenstellung und der Schließstellung betätigbar ist/sind.

Das entsprechend aufgebaute Ventilmodul ist besonders einfach steuerbar, beispielsweise mittels einer elektronischen Steuerungseinrichtung, die Teil eines Kraftfahrzeugs oder Teil des Betriebsflüssigkeitsbehältersystems sein kann.

Eine elektrische Betätigung der ersten Ventilvorrichtung und/oder der zweiten Ventilvorrichtung ist im Sinne der vorliegenden Erfindung als elektromechanische und/oder elektromagnetische Betätigung der jeweiligen Ventilvorrichtungen zu verstehen.

Wenn die erste Ventilvorrichtung zumindest zwei erste Ventileinrichtungen aufweist, die miteinander parallel fluidverbunden sind, dann ist im Sinne der vorliegenden Erfindung eine elektrische Betätigung der ersten Ventilvorrichtung als elektromechanische und/oder elektromagnetische Betätigung der jeweiligen ersten Ventileinrichtungen zu verstehen.

Wenn die zweite Ventilvorrichtung zumindest zwei zweite Ventileinrichtungen aufweist, die miteinander parallel fluidverbunden sind, dann ist im Sinne der vorliegenden Erfindung eine elektrische Betätigung der zweiten Ventilvorrichtung als elektromechanische und/oder elektromagnetische Betätigung der jeweiligen zweiten Ventileinrichtungen zu verstehen.

Vorzugsweise ist das Ventilmodul derart ausgebildet, dass das Gehäuse einen vierten Anschluss zur Fluidverbindung mit einem Ansaugtrakt einer Brennkraftmaschine aufweist, wobei der erste Anschluss und der zweite Abschluss und der dritte Anchluss jeweils innerhalb des Gehäuses mit dem vierten Anschluss fluidverbunden sind. Dabei ist der vierte Anschluss zwischen einer Offenstellung, bei der eine Fluidkommunikation durch den vierten Anschluss hindurch ermöglicht ist, und einer Schließstellung, bei der eine Fluidkommunikation durch den vierten Anschluss hindurch unterbunden ist, verstellbar.

Der vierte Anschluss ist folglich dazu ausgebildet, mit einem Ansaugtrakt einer Brennkraftmaschine fluidverbunden zu sein. Der vierte Anschluss kann auch als Spülanschluss oder Regenerieranschnusss bezeichnet werden.

Vorzugsweise ist das Ventilmodul derart ausgebildet, dass zwischen dem dritten Anschluss und dem vierten Anschluss eine dritte Ventilvorrichtung angeordnet ist, die mit dem dritten Anschluss und dem vierten Anschluss fluidverbunden ist, wobei die dritte Ventilvorrichtung zwischen einer Offenstellung, in der ein Fluidfluss zwischen dem dritte Anschluss und dem vierten Anschluss durch die dritte Ventilvorrichtung ermöglicht ist, und einer Schließstellung, in der ein Fluidfluss zwischen dem dritten Anschluss und dem vierten Anschluss durch die dritte Ventilvorrichtung unterbunden ist, betätigbar ist.

Durch entsprechendes Öffnen und Schließen der dritten Ventilvorrichtung lässt sich der vierte Anschluss beliebig mit dem ersten Anschluss und/oder dem zweiten Anschluss und/oder dem dritten Anschluss beliebig verbinden, wenn die erste Ventilvorrichtung und/oder die zweite Ventilvorrichtung entsprechend betätigt wird.

Vorzugsweise ist das Ventilmodul derart ausgebildet, dass die dritte Ventilvorrichtung zumindest zwei dritte Ventileinrichtungen aufweist, die miteinander parallel fluidverbunden sind, wobei jede drirte Ventileinrichtung zwischen einer Offenstellung und einer Schließstellung betätigbar ist.

Durch eine entsprechende Ausbildung des Ventilmoduls ist es auf eine einfache Art ermöglicht, dass durch entsprechende Betätigung bzw. Verstellung einzelner dritter Ventileinrichtungen zwischen deren Offenstellung und deren Schließstellung ein Strömungswiderstand zwischen dem dritten Anschluss und dem vierten Anschluss eingestellt werden kann. Somit lässt sich das Ventilmodul auf eine einfache Art an die entsprechenden Betriebszustände eines Betriebsflüssigkeitsbehältersystems anpassen.

Vorzugsweise ist das Ventilmodul derart ausgebildet, dass die zumindest zwei dritten Ventileinrichtungen voneinander verschiedene freie Öffnungsquerschnittsflächen aufweisen.

Unter der freien Öffnungsquerschnittsfläche ist erfindungsgemäß insbesondere die freie Öffnungsqueschnittsfläche eines Ventilsitzes der dritten Ventileinrichtung zu verstehen.

Vorzugsweise ist das Ventilmodul derart ausgebildet, dass der erste Anschluss und/oder der zweite Anschluss und/oder der dritte Anschluss und oder der vierte Anschluss jeweils elektrisch zwischen der Offenstellung und der Schließstellung betätigbar ist/sind.

Das entsprechend aufgebaute Ventilmodul ist besonders einfach steuerbar, beispielsweise mittels einer elektronischen Steuerungseinrichtung, die Teil eines Kraftfahrzeugs oder Teil des Betriebsflüssigkeitsbehältersystems sein kann.

Eine elektrische Betätigung der jeweiligen Anschlüsse ist im Sinne der vorliegenden Erfindung als elektromechanische und/oder elektromagnetische Betätigung der jeweiligen Anschlüsse zu verstehen.

Vorzugsweise ist das Ventilmodul derart ausgebildet, dass der erste Anschluss als erstes Ventil und/oder der zweite Anschluss als zweites Ventil und/oder der dritte Anschluss als drittes Ventil und/oder der vierte Anschluss als viertes Ventil ausgebildet ist/sind.

Ein entsprechend ausgebildetes Ventilmodul weist eine hohe Flexibilität bzw. Anpassungsfähigkeit an unterschiedlichste Einsatzzwecke auf.

Die jeweiligen Ventile können insbesondere als lineare Magnetventile mit einem Stößel und/oder als Drehmagnet-Ventile ausgebildet sein. Ferner können die jeweiligen Ventile als Stellmotor- bzw. Schrittmotor-Ventile ausgebildet sein, die weiter vorzugsweise eine Nockenwelle oder einen Drehzylinder oder einen Spindelantrieb aufweisen. Ferner können die jeweiligen Ventile auf dem Formgedächtnisprinzip basieren. Ferner können die jeweiligen Ventile mittels eines Piezokristalls und/oder mittels Wanderwellen zwischen deren Offenstellung und deren Schließstellung betätigbar sein. Begrenzungen hinsichtlich der Ausführungen der jeweiligen Ventile bestehen daher keine.

Vorzugsweise ist das Ventilmodul derart ausgebildet, dass das erste Ventil und/oder das zweite Ventil und/oder das dritte Ventil und/oder das vierte Ventil jeweils als Proportionalventil ausgebildet ist/sind und kontinuierlich zwischen Offenstellung und Schließstellung elektrisch verstellbar ist/sind.

Die jeweiligen Ventile des Ventilmoduls sind bei einer entsprechenden Ausgestaltung kontinuierlich zwischen der Offenstellung, in der der Strömungswiderstand der jeweiligen Ventile - also des ersten Ventils und/oder des zweiten Ventils und/oder des dritten Ventils und/oder des vierten Ventils - minimal ist, und einer Schließstellung, in der der Strömungswiderstand der jeweiligen Ventile maximal ist, verstellbar. In der Offenstellung ist vorzugsweise ein Abstand zwischen einem Ventilkörper und einem Ventilsitz maximal, wohingegen in der Schließstellung der Ventilkörper den Ventilsitz verschließt. Dadurch wird eine effektive Entlüftungsquerschnittsfläche des jeweiligen Ventils verändert. Die effektive Entlüftungsquerschnittsfläche des jeweiligen Ventils ist die freie Öffnung (Fläche der Öffnung) des jeweiligen Ventils, durch die das aus dem Betriebsflüssigkeitsbehälter ausgetriebene Gas (beispielsweise bei einem Befüllvorgang) hindurchfließen muss. Die effektive Entlüftungsquerschnittsfläche kann auch als effektive Entlüftungsöffnung der jeweiligen Ventile bezeichnet werden.

Wenn die effektive Entlüftungsquerschnittsfläche eines der Ventile des Ventilmoduls reduziert wird, wird das entsprechende Ventil des Ventilmoduls in eine Zwischenstellung zwischen der Offenstellung und der Schließstellung überführt.

Die jeweiligen Ventile weisen in deren Offenstellungen eine bauartabhängige Maximalentlüftungsquerschnittsfläche auf. In der Schließstellung der jeweiligen Ventile beträgt die Entlüftungsquerschnittsfläche vorzugsweise Null.

Das Reduzieren der effektiven Entlüftungsquerschnittsfläche eines Ventils des Ventilmoduls wird vorzugsweise durch teilweises und/oder stufenloses Verschließen eines Ventilsitzes des entsprechenden Ventils mittels eines Ventilkörpers des entsprechenden Ventils realisiert. In der Offenstellung des entsprechenden Ventils weist der Ventilkörper zum Ventilsitz, der auch als Ventilöffnung bezeichnet werden kann, einen Ventilspezifischen Maximalabstand auf. In der Schließstellung des entsprechenden Ventils verschließt der Ventilkörper den Ventilsitz, so dass die Entlüftungsquerschnittsfläche Null ist.

Auch kann jedes der Ventile des Ventilmoduls eine Entlüftungsöffnung aufweisen, die mittels eines senkrecht zu einer Flächennormalen der Entlüftungsöffnung betätigbaren/verschiebbaren Schiebers variierbar/veränderbar ist. Ferner kann jedes Ventil des Ventilmoduls eine Drosselklappe aufweisen. Beschränkungen hinsichtlich der Ausbildung der Ventile des Ventilmoduls bestehen erfindungsgemäß nicht.

Vorzugsweise ist das Ventilmodul derart ausgebildet, dass der erste Anschluss und/oder der zweite Anschluss und/oder der dritte Anschluss und/oder der vierte Anschluss diskret zwischen dessen jeweiliger Offenstellung und dessen jeweiliger Schließstellung verstellbar ist/sind.

Eine diskrete Verstellbarkeit eines der Anschlüsse des Ventilmoduls bedeutet, dass der entsprechende Anschluss gezielt lediglich in dessen Offenstellung oder in dessen Schließstellung verfahren/veränderbar/betätigt werden kann. Eine Reduzierung des durch einen entsprechenden Anschluss hindurchströmbaren Volumenstroms wird bei einem entsprechend ausgebildeten Ventilmodul durch intermittierendes Verstellen des jeweiligen Anschlusses zwischen dessen Offenstellung und dessen Schließstellung realisiert. Ein entsprechendes intermittierendes Betätigen des entsprechenden Anschlusses kann auch als Takten und/oder als Pulsen des Anschlusses bezeichnet werden.

Vorzugsweise ist das Ventilmodul derart ausgebildet, dass das Ventilmodul einen Flüssigkeits-Dampf-Abscheider aufweist, über den der erste Anschluss und der zweite Anschluss mit dem dritten Anschluss und dem vierten Anschluss fluidverbunden sind.

Ein entsprechend ausgebildetes Ventilmodul weist eine nochmals erhöhte Integrationsdichte auf, so dass ein mit diesem Ventilmodul ausgestattetes Betriebsflüssigkeitsbehältersystem weniger Einzelbauteile bzw. Einzelkomponenten aufweist. Mittels des Flüssigkeits-Dampf-Abscheiders wird gewährleistet, dass keine Betriebsflüssigkeit in flüssiger Form an die Atmosphäre bzw. an ein Adsorptionsfilter, das zwischen dem vierten Anschluss und der Atmosphäre eingebaut ist, gelangt.

Vorzugsweise ist das Ventilmodul derart ausgebildet, dass dieses ein Überdruckschutzventil aufweist, das zwischen dem ersten Anschluss und dem vierten Anschluss angeordnet ist und mit diesen jeweils fluidverbunden ist. Das Überdruckschutzventil ist zwischen einer Offenstellung, in der ein Gasaustausch durch das Überdruckschutzventil ermöglicht ist, und einer Schließstellung, in der ein Gasaustausch durch das Überdruckschutzventil unterbunden ist, beweglich. Das Überdruckschutzventil befindet sich in dessen Schließstellung, wenn der Innendruck im Betriebsflüssigkeitsbehälterinnenraum kleiner als der Maximaldruck ist, und das Überdruckschutzventil wird in dessen Offenstellung überführt, wenn der Innendruck im Betriebsflüssigkeitsbehälterinnenraum größer als der Maximaldruck ist.

Das Überdruckschutzventil ist folglich parallel zwischen dem ersten Anschluss und dem vierten Anschluss geschaltet. Das Überdruckschutzventil kann vorzugsweise innerhalb des Ventilmoduls angeordnet und realisiert sein.

Das Überdruckschutzventil ist vorzugsweise ein passives Überdruckschutzventil. D.h., dass ein Ventilkörper des Überdruckschutzventils nicht elektrisch (d.h. weder elektromechanisch noch elektromagnetisch) sondern lediglich durch eine Druckdifferenz beweglich ist.

Vorzugsweise ist das Ventilmodul derart ausgebildet, dass dieses ein Unterdruckschutzventil aufweist. Das Unterdruckschutzventil ist vorzugsweise zwischen dem ersten Anschluss und dem vierten Anschluss angeordnet und mit diesen jeweils fluidverbunden. Alternativ dazu ist das Unterdruckschutzventil vorzugsweise zwischen dem ersten Anschluss und dem zweiten Anschluss angeordnet und mit diesen jeweils fluidverbunden. Das Unterdruckschutzventil ist zwischen einer Offenstellung, in der ein Gasaustausch durch das Unterdruckschutzventil ermöglicht ist, und einer Schließstellung, in der ein Gasaustausch durch das Unterdruckschutzventil unterbunden ist, beweglich. Ddas Unterdruckschutzventil befindet sich in dessen Schließstellung, wenn der Innendruck im Betriebsflüssigkeitsbehälterinnenraum größer als der Minimaldruck ist, und das Unterdruckschutzventil wird in dessen Offenstellung überführt, wenn der Innendruck im Betriebsflüssigkeitsbehälterinnenraum kleiner als der Minimaldruck ist.

Das Unterdruckschutzventil kann vorzugsweise innerhalb des Ventilmoduls angeordnet und realisiert sein.

Das Unterdruckschutzventil ist vorzugsweise ein passives Unterdruckschutzventil. D.h., dass ein Ventilkörper des Unterdruckschutzventils nicht elektrisch (d.h. weder elektromechanisch noch elektromagnetisch) sondern lediglich durch eine Druckdifferenz beweglich ist.

Vorzugsweise ist das Ventilmodul derart ausgebildet, dass dieses folgende Merkmale aufweist:
- das Verhältnis einer ersten Querschnittsfläche des ersten Anschlusses zu einer zweiten Querschnittsfläche des zweiten Anschlusses beträgt zwischen 0,64 und 41; und/oder
- das Verhältnis einer ersten Querschnittsfläche des ersten Anschlusses zu einer vierten Querschnittsfläche des vierten Anschlusses beträgt zwischen 1 und 7,3; und/oder
- das Verhältnis einer ersten Querschnittsfläche des ersten Anschlusses zu einer dritten Querschnittsfläche des dritten Anschlusses beträgt zwischen 0,5 und 4.

Bei einer entsprechenden Ausbildung des Ventilmoduls können die Querschnittsflächen bzw. die Durchmesser der ersten bis vierten Anschlüsse derat dimensioniert werden, dass bei möglichst kleinen ersten bis vierten Querschnittsflächen noch genügen grosse Fluidströmungen durch die ersten bis vierten Anschlüsse ermöglicht sind, um die Funktionalität des Ventilmoduls zu gewährleisten.

Demnach ist bei jeweils kreisrunden ersten bis vierten Anschlüssen des Ventilmoduls folgendes gegeben:
- das Verhältnis eines ersten Durchmessers des ersten Anschlusses zu einem zweiten Durchmesser des zweiten Anschlusses beträgt zwischen 0,8 und 6,4; und/oder
- das Verhältnis eines ersten Durchmessers des ersten Anschlusses zu einem vierten Durchmesser des vierten Anschlusses beträgt zwischen 1 und 2,7; und/oder
- das Verhältnis eines ersten Durchmessers des ersten Anschlusses zu einem dritten Durchmesser des dritten Anschlusses beträgt zwischen 0,7 und 2.

Vorzugsweise beträgt der Durchmesser des ersten Anschlusses zwischen 12mm und 16mm, der Durchmesser des zweiten Anschlusses zwischen 2,5mm und 6mm, der Durchmesser des vierten Anschlusses zwischen 6mm und 10mm, und der Durchmesser des dritten Anschlusses zwischen 12mm und 16mm.

Weiter vorzugsweise beträgt der Durchmesser des ersten Anschlusses zwischen 10mm und 12mm, der Durchmesser des zweiten Anschlusses zwischen 10mm und 12mm, der Durchmesser des vierten Anschlusses zwischen 6mm und 10mm, und der Durchmesser des dritten Anschlusses zwischen 6mm und 8mm.

Die der vorliegenden Erfindung zugrundeliegende Aufgabe wird ferner durch ein Betriebsflüssigkeitsbehältersystem für ein Kraftfahrzeug mit einer Brennkraftmaschine gelöst, das einen Betriebsflüssigkeitsbehälter aufweist, in dessen Betriebsflüssigkeitsbehälterinnenraum ein Einfüllrohr zum Befüllen des Betriebsflüssigkeitsbehälterinnenraums mit einer Betriebsflüssigkeit mündet. Das erfindungsgemäße Betriebsflüssigkeitsbehältersystem weist ein oben beschriebenes Ventilmodul auf, wobei der erste Anschluss des Ventilmoduls mit dem Betriebsflüssigkeitsbehälterinnenraum, der zweite Anschluss des Ventilmoduls mit dem Einfüllrohr und der dritte Anschluss des Ventilmoduls zumindest mittelbar mit der Atmosphäre fluidverbunden ist.

Das erfindungsgemäße Betriebsflüssigkeitsbehältersystem weist den Vorteil auf, dass alle Komponenten, die für eine Betankungsentlüftung und eine Betriebsentlüftung und für eine eventuelle Spülung eines Adsorptionsfilters notwendig sind, in einer Baugruppe vereinigt sind, so dass das erfindungsgemäße Betriebsflüssigkeitsbehältersystem weniger Einzelkomponenten als aus dem Stand der Technik bekannte Betriebsflüssigkeitsbehältersysteme aufweist. Das erfindungsgemäße Betriebsflüssigkeitsbehältersystem weist einen vereinfachten Aufbau auf. So können beispielsweise Anschlüsse am Betriebsflüssigkeitsbehälter selber und an einem Adsorptionsfilter reduziert sein. Ein Betriebsflüssigkeitsbehälter des erfindungsgemäßen Betriebsflüssigkeitsbehältersystems benötigt lediglich nur noch einen einzigen Anschluss, der beispielsweise über ein Roll-Over-Ventil realisiert ist, der über eine Fluidleitung mit dem ersten Anschluss des Ventilmoduls verbunden ist, um unterschiedliche Betankungsentlüftungen (entweder Entlüftung der aus dem Betriebsflüssigkeitsbehälter ausgetriebenen Gase über ein Adsorptionsfilter und/oder über das Einfüllrohr) und eine Betriebsentlüftung zu ermöglichen.

Betriebsflüssigkeitsbehälter im Sinne der Erfindung sind insbesondere aber nicht ausschließlich Kraftstoffbehälter (für Ottokraftstoffe oder Dieselkraftstoffe) sondern auch Harnstoffbehälter, Wischwasserbehälter, Ölbehälter, Nebenflüssigkeitsbehälter oder Additivbehälter jeweils für Kraftfahrzeuge. Der Betriebsflüssigkeitsbehälter ist vorzugsweise als Kraftstoffbehälter ausgebildet. Das Betriebsflüssigkeitsbehältersystem ist vorzugsweise als Kraftstoffbehältersystem ausgebildet.

Vorzugsweise ist das Betriebsflüssigkeitsbehältersystem derart ausgebildet, dass dieses ein Ventilmodul mit den Merkmalen des Anspruchs 8 aufweist, wobei der vierte Anschluss mit einem Ansaugtrakt der Brennkraftmaschine fluidverbunden ist.

Vorzugsweise weist das Betriebsflüssigkeitsbehältersystem ein Adsorptionsfilter zur Adsorption von sich in der Dampfphase befindlicher Betriebsflüssigkeit auf, wobei der dritte Anschluss des Ventilmoduls mit dem Adsorptionsfilter fluidverbunden ist.

Das entsprechend ausgebildete Betriebsflüssigkeitsbehältersystem weist im Vergleich zu aus dem Stand der Technik bekannten Betriebsflüssigkeitsbehältersystemen einen vereinfachten Aufbau auf, da das Adsorptionsfilter lediglich über einen einzelnen Anschluss des Adsorptionsfilters mit dem Betriebsflüssigkeitsbehälterinnenraum und einem Ansaugtrakt der Brennkraftmaschine fluidverbunden ist. Je nach Schaltung der jeweiligen Anschlüsse des Ventilmoduls kann das Adsorptionsfilter mit dem Ansaugtrakt der Brennkraftmaschine fluidverbunden sein, um mittels Ansaugluft gespült zu werden. Ferner kann das Adsorptionsfilter bei entsprechender Schaltung der Anschlüsse des Ventilmoduls mit dem Betriebsflüssigkeitsbehälterinnenraum für eine Betriebsentlüftung und/oder eine Betankungsentlüftung fluidverbunden sein. Ferner kann eine Beladung des Adsorptionsfilters durch entsprechende Schaltung des ersten und/oder des vierten Anschlusses in deren jeweilige Schließstellung vermieden werden, so dass keine Fluidkommunikation des Betriebsflüssigkeitsbehälterinnenraums mit dem Adsorptionsfilter besteht.

Das Adsorptionsfilter ist vorzugsweise als Aktivkohlefilter ausgebildet.

Vorzugsweise weist das Betriebsflüssigkeitsbehältersystem ein oben beschriebenes Ventilmodul auf, bei dem die erste Ventilvorrichtung und/oder die zweite Ventilvorrichtung elektrisch zwischen der Offenstellung und der Schließstellung betätigbar ist/sind. Ferner weist das Betriebsflüssigkeitsbehältersystem eine elektronische Steuerungseinrichtung auf, die mit dem Ventilmodul über eine Datenleitung und/oder über eine Stromleitung zum Austausch von Daten und/oder elektrischer Energie gekoppelt ist, wobei die erste Ventilvorrichtung und die zweite Ventilvorrichtung mittels von der Steuerungseinrichtung ausgegebenen Steuersignalen zwischen deren jeweiligen Offenstellungen und deren jeweiligen Schließstellungen betätigbar sind.

Vorzugsweise sind die erste Ventilvorrichtung und/oder die zweite Ventilvorrichtung mittels von der Steuerungseinrichtung ausgegebenen Steuersignalen jeweils in eine Zwischenstellung betätigbar/verstellbar, wobei die Zwischenstellung zwischen der jeweiligen Offenstellung und der jeweiligen Schließstellungen der betreffenden Ventilvorrichtung ist.

Vorzugsweise weist das Betriebsflüssigkeitsbehältersystem ein oben beschriebenes Ventilmodul auf, bei dem der erste Anschluss und/oder der zweite Anschluss und/oder der dritte Anschluss und oder der vierte Anschluss jeweils elektrisch zwischen der Offenstellung und der Schließstellung betätigbar ist/sind. Ferner weist das Betriebsflüssigkeitsbehältersystem eine elektronische Steuerungseinrichtung auf, die mit dem Ventilmodul über eine Datenleitung und/oder über eine Stromleitung zum Austausch von Daten und/oder elektrischer Energie gekoppelt ist, wobei der erste Anschluss, der zweite Anschluss, der dritte Anschluss und der vierte Anschluss jeweils mittels von der Steuerungseinrichtung ausgegebenen Steuersignalen zwischen deren jeweiligen Offenstellungen und deren jeweiligen Schließstellungen betätigbar ist.

Vorzugsweise sind der erste Anschluss und/oder der zweite Anschluss und/oder der dritte Anschluss und/oder der vierte Anschluss mittels von der Steuerungseinrichtung ausgegebenen Steuersignalen jeweils in eine Zwischenstellung betätigbar/verstellbar, wobei die Zwischenstellung zwischen der jeweiligen Offenstellung und der jeweiligen Schließstellungen des betreffenden Anschlusses ist.

Weiter vorzugsweise weist das Betriebsflüssigkeitsbehältersystem zumindest einen Füllstandsensor zum Ermitteln eines Füllstands der Betriebsflüssigkeit im Betriebsflüssigkeitsbehälter auf, wobei die elektronische Steuerungseinrichtung mit dem Füllstandsensor über eine Datenleitung zum Empfangen von Daten gekoppelt ist.

Bei dem entsprechend ausgebildeten Betriebsflüssigkeitsbehältersystem kann bei Erreichen eines Soll-Füllstandes ein Betankungsstopp eingeleitet werden. Insbesondere kann durch Steuerung des ersten Anschlusses und/oder des zweiten Anschlusses in eine Zwischenstellung zwischen deren Offenstellung und deren Schließstellung ein langsames Ansteigen einer Betriebsflüssigkeitssäule im Einfüllrohr erreicht werden, so dass bei einem so eingeleiteten Betankungsstopp weniger oder gar keine Betriebsflüssigkeit aufgrund von aufwallender Betriebsflüssigkeit aus dem Einfüllrohr austritt.

Vorzugsweise weist das Betriebsflüssigkeitsbehältersystem ein Überdruckschutzventil auf, das in einer Fluidleitung zwischen dem Betriebsflüssigkeitsbehälterinnenraum und der Atmosphäre angeordnet ist, wobei das Überdruckschutzventil zwischen einer Offenstellung, in der ein Gasaustausch durch das Überdruckschutzventil ermöglicht ist, und einer Schließstellung, in der ein Gasaustausch durch das Überdruckschutzventil unterbunden ist, beweglich ist. Das Überdruckschutzventil befindet sich in dessen Schließstellung, wenn der Innendruck im Betriebsflüssigkeitsbehälterinnenraum kleiner als der Maximaldruck ist, und das Überdruckschutzventil wird in dessen Offenstellung überführt, wenn der Innendruck im Betriebsflüssigkeitsbehälterinnenraum größer als der Maximaldruck ist.

Das entsprechend ausgebildete Betriebsflüssigkeitsbehältersystem bietet den Vorteil, dass bei einem Stromausfall, z.B. wenn eine Batterie zum Betätigen des Entlüftungsventils aufgrund langer Standzeiten des Kraftfahrzeugs leer ist, sich im Betriebsflüssigkeitsbehälter kein über den Maximaldruck hinausgehender Überdruck aufbauen kann. Dies ist insbesondere vorteilhaft bei einem Ventilmodul, dessen erster und vierter Anschluss sich stromlos in deren Schließstellungen befinden.

Das Überdruckschutzventil ist folglich parallel zwischen dem ersten Anschluss und dem dritten Anschluss geschaltet. Das Überdruckschutzventil kann vorzugsweise innerhalb des Ventilmoduls angeordnet und realisiert sein.

Das Überdruckschutzventil ist ein passives Überdruckschutzventil. D.h., dass ein Ventilkörper des Überdruckschutzventils nicht elektrisch (d.h. weder elektromechanisch noch elektromagnetisch) sondern lediglich durch eine Druckdifferenz beweglich ist.

In der Offenstellung des Überdruckschutzventils ist ein Ventilkörper des Überdruckschutzventils von einem Ventilsitz des Überdruckschutzventils beabstandet. In der Schließstellung des Überdruckschutzventils verschließt der Ventilkörper des Überdruckschutzventils den Ventilsitz des Überdruckschutzventils.

Vorzugsweise weist das Betriebsflüssigkeitsbehältersystem ein Unterdruckschutzventil auf, das in einer Fluidleitung zwischen dem Betriebsflüssigkeitsbehälterinnenraum und der Atmosphäre angeordnet ist, wobei das Unterdruckschutzventil zwischen einer Offenstellung, in der ein Gasaustausch durch das Unterdruckschutzventil ermöglicht ist, und einer Schließstellung, in der ein Gasaustausch durch das Unterdruckschutzventil unterbunden ist, beweglich ist. Dabei befindet sich das Unterdruckschutzventil in dessen Schließstellung, wenn der Innendruck im Betriebsflüssigkeitsbehälterinnenraum größer als der Minimaldruck ist, wobei das Unterdruckschutzventil in dessen Offenstellung überführt, wenn der Innendruck im Betriebsflüssigkeitsbehälterinnenraum kleiner als der Minimaldruck ist.

Das entsprechend ausgebildete Betriebsflüssigkeitsbehältersystem bietet den Vorteil, dass bei einem Stromausfall, z.B. wenn eine Batterie zum Betätigen der Anschlüsse/Ventile des Ventilmoduls aufgrund langer Standzeiten des Kraftfahrzeugs leer ist, sich im Betriebsflüssigkeitsbehälter kein den Minimalinnendruck unterschreitender Unterdruck einstellen kann. Dies ist insbesondere vorteilhaft bei einem Ventilmodul, dessen erster und vierter Anschluss sich stromlos in deren Schließstellungen befinden.

Das Unterdruckschutzventil ist folglich parallel zwischen dem ersten Anschluss und dem dritten Anschluss geschaltet. Das Unterdruckschutzventil kann vorzugsweise innerhalb des Ventilmoduls angeordnet und realisiert sein.

Das Unterdruckschutzventil ist ein passives Unterdruckschutzventil. D. h., dass ein Ventilkörper des Unterdruckschutzventils nicht elektrisch (d. h. weder elektromechanisch noch elektromagnetisch) sondern lediglich durch eine Druckdifferenz beweglich ist.

In der Offenstellung des Unterdruckschutzventils ist ein Ventilkörper des Unterdruckschutzventils von einem Ventilsitz des Unterdruckschutzventils beabstandet. In der Schließstellung des Unterdruckschutzventils verschließt der Ventilkörper des Unterdruckschutzventils den Ventilsitz des Unterdruckschutzventils.

Weitere Vorteile, Einzelheiten und Merkmale der Erfindung ergeben sich nachfolgend aus den erläuterten Ausführungsbeispielen. Dabei zeigen im Einzelnen:
- Figur 1A:: eine schematische Darstellung eines erfindungsgemäßen Betriebsflüssigkeitsbehältersystems, das ein erfindungsgemäßes Ventilmodul aufweist;
- Figur 1B:: das in Figur 1A dargestellte Betriebsflüssigkeitsbehältersystem in Form einer fluidtechnischen Darstellung;
- Figur 2A:: das in Figur 1A dargestellte Betriebsflüssigkeitsbehältersystem, wobei die ersten bis vierten Anschlüsse des Ventilmoduls als erste bis vierte Ventile ausgebildet sind, wobei sich die ersten bis vierten Ventile in einer beispielhaften ersten Schaltstellung befinden;
- Figur 2B:: das in Figur 2A dargestellte Betriebsflüssigkeitsbehältersystem, wobei sich die ersten bis vierten Ventile in einer beispielhaften zweiten Schaltstellung befinden;
- Figur 2C:: das in Figur 2A dargestellte Betriebsflüssigkeitsbehältersystem, wobei sich die ersten bis vierten Ventile in einer beispielhaften dritten Schaltstellung befinden;
- Figur 2D:: das in Figur 2A dargestellte Betriebsflüssigkeitsbehältersystem, wobei sich die ersten bis vierten Ventile in einer beispielhaften vierten Schaltstellung befinden;
- Figur 2E:: das in Figur 2A dargestellte Betriebsflüssigkeitsbehältersystem, wobei sich die ersten bis vierten Ventile in einer beispielhaften fünften Schaltstellung befinden;
- Figur 3A:: eine schematische Darstellung eines der ersten bis vierten Ventile, das als Magnetventil ausgebildet ist und sich in dessen Offenstellung befindet;
- Figur 3B:: das in Figur 3A dargestellte Magnetventil in dessen Schließstellung;
- Figur 4A:: eine schematische Darstellung eines der ersten bis vierten Ventile, das als Ventil mit einem Spindelantrieb ausgebildet ist;
- Figur 4B:: das in Figur 4A dargestellte Ventil in einer anderen Stellung;
- Figur 5:: eine schematische Darstellung eines der ersten bis vierten Ventile, das als Formgedächtnis-Ventil ausgebildet ist und sich in dessen Offenstellung befindet;
- Figur 6A:: eine schematische Darstellung eines in dem erfindungsgemäßen Ventilmodul realisierten Flüssigkeits-DampfAbscheiders basierend auf einem labyrinthartigen Fluidpfad;
- Figur 6B:: eine schematische Darstellung eines in dem erfindungsgemäßen Ventilmodul realisierten Flüssigkeits-DampfAbscheiders basierend auf einer in diesem angeordneten Membran;
- Figur 6C:: eine schematische Darstellung eines in dem erfindungsgemäßen Ventilmodul realisierten Flüssigkeits-DampfAbscheiders mit einer Ausperlmöglichkeit;
- Figur 7A:: eine schematische Darstellung eines weiteren erfindungsgemäßen Betriebsflüssigkeitsbehältersystems, das ein erfindungsgemäßes Ventilmodul gemäß einer weiteren Ausführungsform aufweist;
- Figur 7B:: eine schematische Darstellung eines nochmals weiteren erfindungsgemäßen Betriebsflüssigkeitsbehältersystems, das ein erfindungsgemäßes Ventilmodul gemäß einer nochmals weiteren Ausführungsform aufweist;
- Figur 7C:: ein Ventilmodul gemäß einer weiteren Ausführungsform der vorliegenden Erfindung; und
- Figur 8:: ein Ventilmodul gemäß einer nochmals weiteren Ausführungsform der vorliegenden Erfindung.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

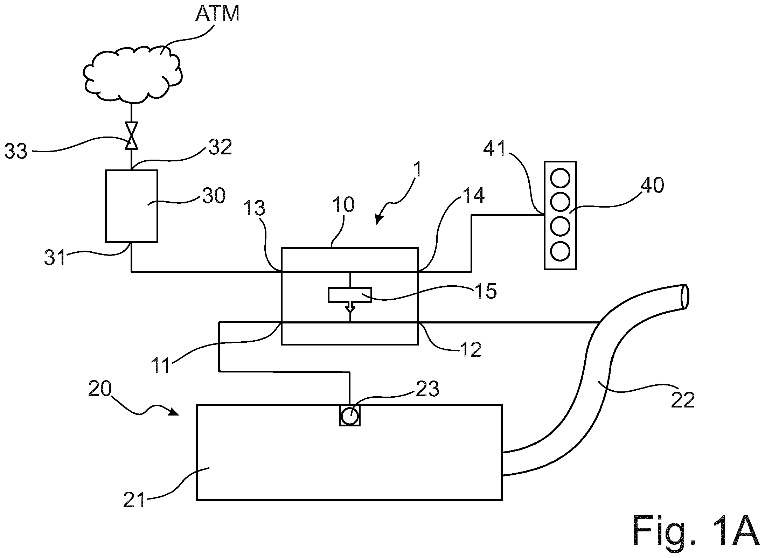

Figur 1A zeigt ein Betriebsflüssigkeitsbehältersystem 100 für ein Kraftfahrzeug mit einer Brennkraftmaschine 40. Das Betriebsflüssigkeitsbehältersystem 100 weist einen Betriebsflüssigkeitsbehälter 20 auf, in dessen Betriebsflüssigkeitsbehälterinnenraum 21 ein Einfüllrohr 22 zum Befüllen des Betriebsflüssigkeitsbehälterinnenraums 21 mit einer Betriebsflüssigkeit mündet. In dem dargestellten Ausführungsbeispiel ist der Betriebsflüssigkeitsbehälter 20 als Kraftstoffbehälter 20 ausgebildet.

Das Betriebsflüssigkeitsbehältersystem 100 weist ferner ein Adsorptionsfilter 30 auf. In dem dargestellten Ausführungsbeispiel ist das Adsorptionsfilter 30 als Aktivkohlefilter 30 ausgebildet. Das Adsorptionsfilter 30 dient zur Adsorption von sich in der Dampfphase befindlicher Betriebsflüssigkeit. In dem dargestellten Ausführungsbeispiel dient das Aktivkohlefilter 30 zur Adsorption von Kraftstoffdämpfen, die aus dem Kraftstofftank 20 ausgetrieben werden. Wie aus Figur 1A ersichtlich ist, ist das Adsorptionsfilter 30 über einen Ausgangsanschluss 32 mit der Atmosphäre fluidverbunden. Zwischen dem Ausgangsanschluss 32 und der Atmosphäre ist ferner ein Diagnoseventil 33 angeordnet, das auch als OBD-Ventil (On-Board-Diagnose-Ventil) bezeichnet wird. Mittels des Diagnoseventils 33 lassen sich beispielsweise Dichtigkeitsprüfungen des Aktivkohlefilters 30 und/oder des Kraftstofftanks 20 und/oder eines noch zu erläuternden Ventilmoduls 1 durchführen.

Weiterhin ist aus Figur 1A ersichtlich, dass das Betriebsflüssigkeitsbehältersystem 100 ein Ventilmodul 1 mit einem Gehäuse 10 aufweist. In dem Gehäuse 10 sind ein erster Anschluss 11, ein zweiter Anschluss 12, ein dritter Anschluss 13 und ein vierter Anschluss 14 ausgebildet. Der erste Anschluss 11 ist über eine Fluidleitung mit einem Entlüftungsventil 23 des Tanks 20 fluidverbunden. In dem dargestellten Ausführungsbeispiel ist das Entlüftungsventil 23 als Roll-Over-Ventil 23 ausgebildet. Jedoch ist die vorliegende Erfindung auf eine entsprechende Ausbildung des Ventils 23 nicht beschränkt. Der zweite Anschluss 12 ist über eine weitere Fluidleitung mit dem Einfüllrohr 22 fluidverbunden. Der vierte Anschluss 14 ist über eine nochmals weitere Fluidleitung mit einem Ansaugtrakt-Eingangsanschluss 41 eines in den Figuren nicht dargestellten Ansaugtrakts der Brennkraftmaschine 40 fluidverbunden. Der dritte Anschluss 13 des Ventilmoduls 10 ist über eine nochmals weitere Fluidleitung mit einem Eingangsanschluss 31 des Adsorptionsfilters 30 fluidverbunden.

Wie aus Figur 1A ersichtlich ist, ist der erste Anschluss 11 innerhalb des Gehäuses 10 jeweils mit dem zweiten Anschluss 12 und dem dritten Anschluss 13 und dem vierten Anschluss 14 fluidverbunden. Der zweite Anschluss 12 wiederum ist innerhalb des Gehäuses 10 jeweils mit dem dritten Anschluss 13 und dem vierten Anschluss 14 fluidverbunden. Der dritte Anschluss 13 wiederum ist ebenfalls innerhalb des Gehäuses 10 mit dem vierten Anschluss 14 fluidverbunden.

Das Ventilmodul 1 weist ferner einen Flüssigkeits-Dampf-Abscheider 15 auf, der auch als Tropfenabscheider 15 bezeichnet werden kann. Über den Tropfenabscheider 15 sind der erste Anschluss 11 und der zweite Anschluss 12 mit dem dritten Anschluss 13 und dem vierten Anschluss 14 fluidverbunden. Somit ist der erste Anschluss 11 mit dem zweiten Anschluss 12 direkt in Serie verbunden. Der erste Anschluss 11 ist hingegen mit dem dritten Anschluss 13 über den Flüssigkeits-Dampf-Abscheider 15 verbunden. Ferner ist der erste Anschluss 11 mit dem vierten Anschluss 14 ebenfalls über den Flüssigkeit-Dampf-Abscheider 15 verbunden. Der zweite Anschluss 12 ist mit dem dritten Anschluss 13 über den Flüssigkeit-Dampf-Abscheider 15 verbunden. Ferner ist der zweite Anschluss 12 mit dem vierten Anschluss 14 ebenfalls über den Flüssigkeit-Dampf-Abscheider 15 verbunden. Der dritte Anschluss 13 ist mit dem vierten Anschluss 14 direkt fluidverbunden.

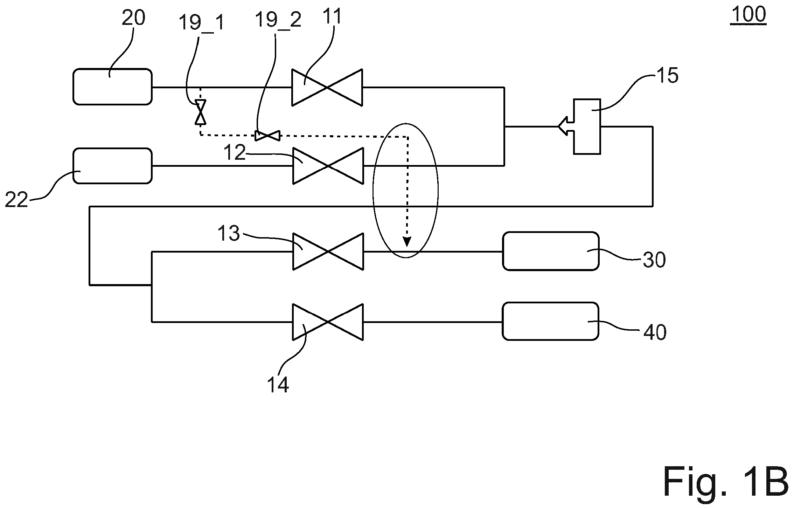

Figur 1B zeigt das in Figur 1A dargestellte Betriebsflüssigkeitsbehältersystem 100 in fluidtechnischer Darstellung. Dabei ist der erste Anschluss 11 als erstes Ventil 11, der zweite Anschluss 12 als zweites Ventil 12, der dritte Anschluss 13 als drittes Ventil 13 und der vierte Anschluss 14 als viertes Ventil 14 ausgebildet.

Ferner ist aus Figur 1B ersichtlich, dass zwischen dem Tank 20 und vor dem ersten Ventil 11 und dem Aktivkohlefilter 30 vor dem Eingangsanschluss 31 des Aktivkohlefilters 30 ein Druck-Bypass eingerichtet ist, der als gestrichelte Linie dargestellt ist. Dieser Druck-Bypass weist ein Überdruckschutzventil 19_1 auf, das in der Fluidleitung zwischen dem Kraftstoffbehälterinnenraum 21 und der Atmosphäre, im Genaueren des Eingangsanschlusses 31 des Aktivkohlefilters 30 angeordnet ist. Das Überdruckschutzventil 19_1 ist zwischen einer Offenstellung, in der ein Gasaustausch durch das Überdruckschutzventil 19_1 ermöglicht ist, und einer Schließstellung, in der ein Gasaustausch durch das Überdruckschutzventil 19_1 unterbunden ist, beweglich. Dabei befindet sich das Überdruckschutzventil 19_1 in dessen Schließstellung, wenn der Innendruck im Betriebsflüssigkeitsbehälterinnenraum 21 kleiner als der Maximaldruck ist, wohingegen das Überdruckschutzventil 19_1 in dessen Offenstellung überführt wird, wenn der Innendruck im Betriebsflüssigkeitsbehälterinnenraum 21 größer als der Maximaldruck wird.

Der Druck-Bypass kann ferner ein Unterdruckschutzventil 19_2 aufweisen, das ebenfalls in der Fluidleitung zwischen dem Betriebsflüssigkeitsbehälterinnenraum 21 und dem Eingangsanschluss 31 des Aktivkohlefilters 30 angeordnet sein kann. Das Unterdruckschutzventil 19_2 ist zwischen einer Offenstellung, in der ein Gasaustausch durch das Unterdruckschutzventil 19_2 ermöglicht ist, und einer Schließstellung, in der ein Gasaustausch durch das Unterdruckschutzventil 19_2 unterbunden ist, beweglich. Das Unterdruckschutzventil 19_2 befindet sich in dessen Schließstellung, wenn der Innendruck im Betriebsflüssigkeitsbehälterinnenraum größer als der Minimaldruck ist, wohingegen das Unterdruckschutzventil 19_2 in dessen Offenstellung überführt wird, wenn der Innendruck im Betriebsflüssigkeitsbehälterinnenraum 21 kleiner als der Minimaldruck ist.

Sowohl das Überdruckschutzventil 19_1 als auch das Unterdruckschutzventil 19_2 können innerhalb des Gehäuses 10 des Ventilmoduls angeordnet sein.

Das Ventilmodul 1 ist derart ausgebildet, dass der erste Anschluss 11 bzw. das erste Ventil 11, der zweite Anschluss 12 bzw. das zweite Ventil 12, der dritte Anschluss 13 bzw. das dritte Ventil 13 und der vierte Anschluss 14 bzw. das vierte Ventil 14 jeweils unabhängig voneinander zwischen einer Offenstellung, bei der eine Fluidkommunikation durch den jeweiligen Anschluss bzw. das jeweilige Ventil 11, 12, 13, 14 hindurch ermöglicht ist, und einer Schließstellung betätigbar sind, bei der eine Fluidkommunikation durch den jeweiligen Anschluss bzw. das jeweilige Ventil 11, 12, 13,14 hindurch unterbunden ist. Das Ventilmodul 1 ist dabei derart ausgebildet, dass der erste Anschluss 11 bzw. das erste Ventil 11 und der zweite Anschluss 12 bzw. das zweite Ventil 12 und der dritte Anschluss 13 bzw. das dritte Ventil 13 und der vierte Anschluss 14 bzw. das vierte Ventil 14 jeweils elektrisch zwischen deren Offenstellung und deren Schließstellung betätigbar sind.

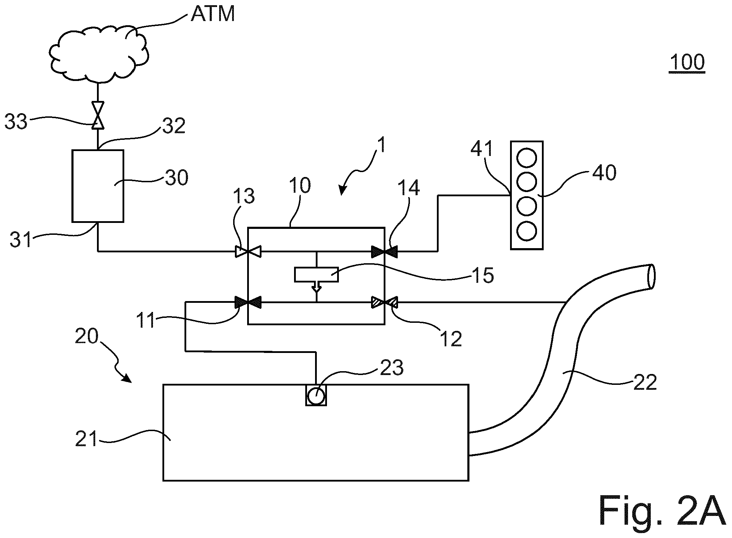

In Figur 2A weist das Ventilmodul 1 eine Schaltstellung auf, bei der das erste Ventil 11 und das vierte Ventil 14 jeweils geschlossen sind. Die Stellung des zweiten Ventils ist frei, sodass sich das zweite Ventil entweder in dessen Offenstellung, in dessen Schließstellung oder in einer Zwischenstellung zwischen der Offenstellung und der Schließstellung befinden kann. Das dritte Ventil 13 befindet sich in dessen Offenstellung. Bei einer entsprechenden Schaltung der ersten bis vierten Ventile 11, 12, 13, 14 befindet sich das Betriebsflüssigkeitsbehältersystem 100 in einem Zustand, bei dem eine Spülung des Aktivkohlefilters 30 unterbunden ist. In diesem Betrieb kann das Kraftfahrzeug mittels der Brennkraftmaschine 40 angetrieben werden. Wenn es sich bei dem Kraftfahrzeug um einen Hybrid-Kraftfahrzeug handelt, das eine Verbrennungskraftmaschine 40 und darüber hinaus noch eine alternative Antriebsquelle, beispielsweise einen Elektromotor aufweist, kann das Kraftfahrzeug auch in einem elektrischen Antriebsmodus betrieben werden, wobei dann die Schaltstellungen des Ventilmoduls 1 wie in Figur 2A sind. Die in Figur 2A dargestellte Schaltstellung des Ventilmoduls 1 wird auch beim Parken des Kraftfahrzeugs verwendet.

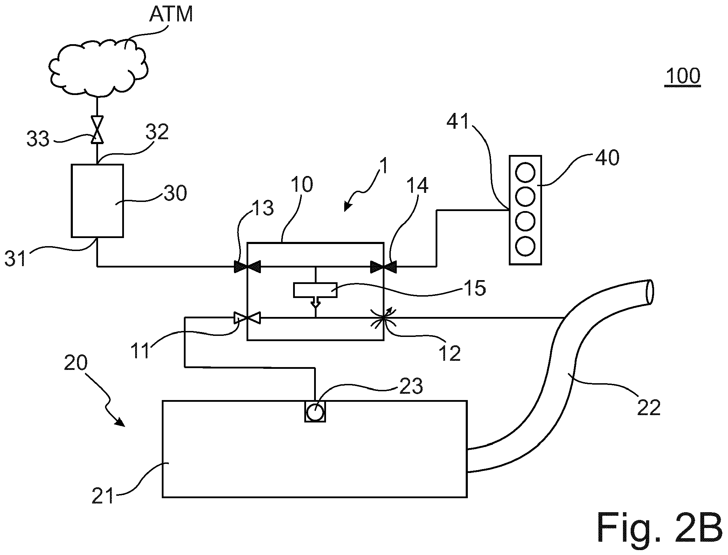

Figur 2B zeigt das in Figur 1 dargestellte Betriebsflüssigkeitsbehältersystem 100, wobei sich das Ventilmodul 1 in einem anderen Schaltzustand als in Figur 2A befindet. Bei dem in Figur 2B dargestellten Ventilmodul 1 befindet sich dieses in einer Stellung, bei dem eine Befüllung und ein Befüllstopp realisiert sind, bei dem ein aus dem Kraftstofftank 20 ausgetriebenes KraftstoffDampf-Gemisch in das Einfüllrohr 22 zurückgeleitet und darüber entweder an die Atmosphäre abgegeben wird, wobei dieses von einer in den Figuren nicht dargestellten Absaugeinrichtung abgesaugt wird, und/oder auch teilweise zurück in den Kraftstofftankinnenraum 21 befördert wird. Zu diesem Zweck befindet sich das erste Ventil 11 in dessen Offenstellung. Sowohl das dritte Ventil 13 als auch das vierte Ventil 14 befinden sich in dessen jeweiliger Schließstellung. Das zweite Ventil 12 ist in dem vorliegenden Beispiel als ein einstellbares Ventil 12 ausgebildet, dessen Durchflussvolumenstrom einstellbar ist.

Das in Figur 2B dargestellten Ventilmodul 1 könnte aber auch derart ausgebildet sein, dass das erste Ventil 11 als einstellbares Ventil 11 ausgebildet ist, und das zweite Ventil 12 sich in dessen Offenstellung befindet.

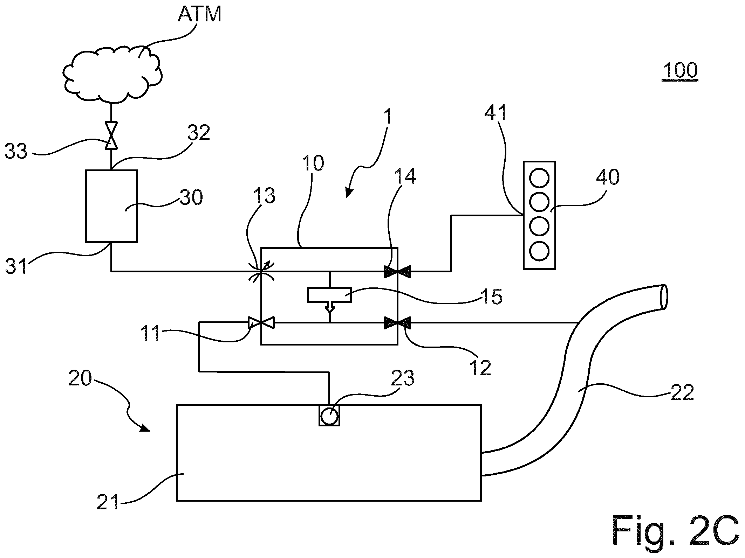

Bei dem in Figur 2C dargestellten Betriebsflüssigkeitsbehältersystems 100 befindet sich das Ventilmodul 1 in einer Schaltstellung, bei der eine Befüllung und ein Befüllstopp ermöglicht sind, wobei die aus dem Kraftstofftank 20 ausgetriebenen Gase über das Aktivkohlefilter 30 an die Atmosphäre abgegeben werden. Zu diesem Zweck befindet sich das erste Ventil 11 in dessen Offenstellung, das zweite Ventil 12 befindet sich in dessen Schließstellung, das vierte Ventil 14 befindet sich ebenfalls in dessen Schließstellung und das dritte Ventil 13 ist als einstellbares Ventil 13 ausgebildet, dessen Durchflussvolumenstrom einstellbar ist. Wenn der Durchflussvolumenstrom durch das dritte Ventil 13 reduziert wird, kann nur noch ein kleinerer Volumenstrom von Kraftstoffdampf aus dem Kraftstoffbehälter 20 an das Aktivkohlefilter 30 abgeleitet werden, sodass ein Druck innerhalb des Kraftstofftanks 20 ansteigt, sodass eine Kraftstoffsäule innerhalb des Einfüllrohrs 22 ebenfalls ansteigt, bis eine Abschaltöffnung eines nicht dargestellten Zapfventils erreicht wird, und ein Befüllstopp erzielt wird.

Es ist jedoch auch möglich, bei dem in Figur 2C dargestellten Betriebsflüssigkeitsbehältersystems 100 das zweite Ventil 12 als einstellbares Ventil 12 auszubilden, so dass gesteuert eine Rezirkulation von aus dem Betriebsflüssigkeitsbehälter 20 ausgetriebenen Dämpfen zurück in den Betriebsflüssigkeitsbehälterinnenraum 21 über das Einfüllrohr 22 ermöglicht ist.

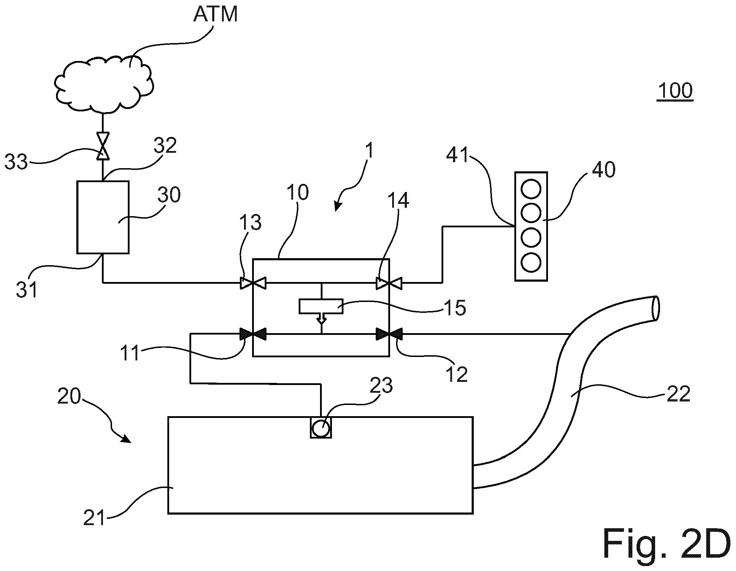

Bei dem in Figur 2D dargestellten Betriebsflüssigkeitsbehältersystem 100 befindet sich das Ventilmodul 1 in einer Schaltstellung, die für den Betrieb des Kraftfahrzeugs in einem sogenannten Verbrenner-Modus geeignet ist, bei dem der Antrieb des Kraftfahrzeugs über die Brennkraftmaschine 40 erfolgt. Dabei wird das Aktivkohlefilter 30 durch Ansaugluft der Brennkraftmaschine 30 gespült. Die in Figur 2D dargestellte Schaltstellung des Ventilmoduls 1 ist auch für einen Fall eines Unfalls des Kraftfahrzeugs geeignet. Zu diesem Zweck befinden sich sowohl das erste Ventil 11 als auch das zweite Ventil 12 jeweils in deren Schließstellung, wohingegen sich das dritte Ventil 13 und das vierte Ventil 14 jeweils in deren Offenstellung befinden.

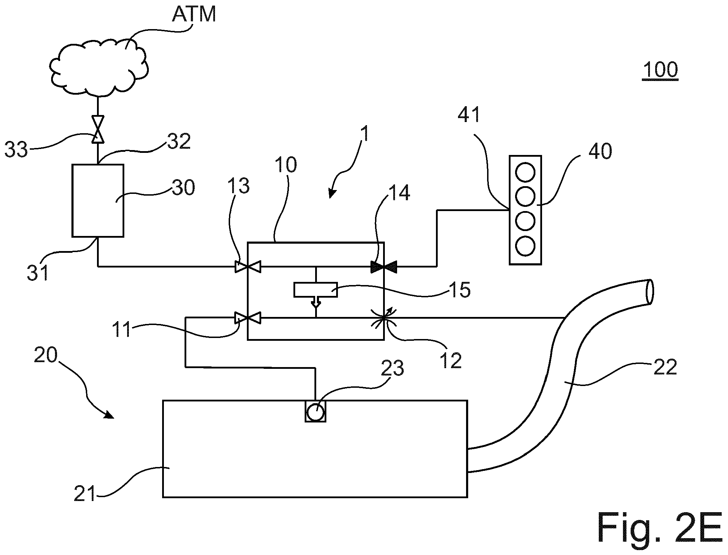

Bei dem in Figur 2E dargestellten Betriebsflüssigkeitsbehältersystem 100 befindet sich das Ventilmodul 1 in einer Schaltstellung, bei dem ein Befüllvorgang ermöglicht ist, bei dem Kraftstoffdämpfe aus dem Kraftstofftank 20 zur Filterung an das Aktivkohlefilter 30 geleitet werden und gleichzeitig teilweise auch über das Einfüllrohr 22 zurück in den Kraftstoffbehälterinnenraum 21 befördert werden. Die in Figur 2E dargestellte Schaltstellung des Ventilmoduls 1 ist auch dazu geeignet, eine Diagnose des Systems mittels des OBD-Ventils 33 durchzuführen. Ferner ist die in Figur 2E dargestellte Schaltstellung des Ventilmoduls 1 für einen aktiven Druckabbau innerhalb des Kraftstofftanks 20 geeignet. Zu diesem Zweck befindet sich das erste Ventil 11 und das dritte Ventil 134 jeweils in deren Offenstellung. Das zweite Ventil 12 ist als einstellbares Ventil 12 ausgebildet, und das vierte Ventil 14 befindet sich in dessen Schließstellung.

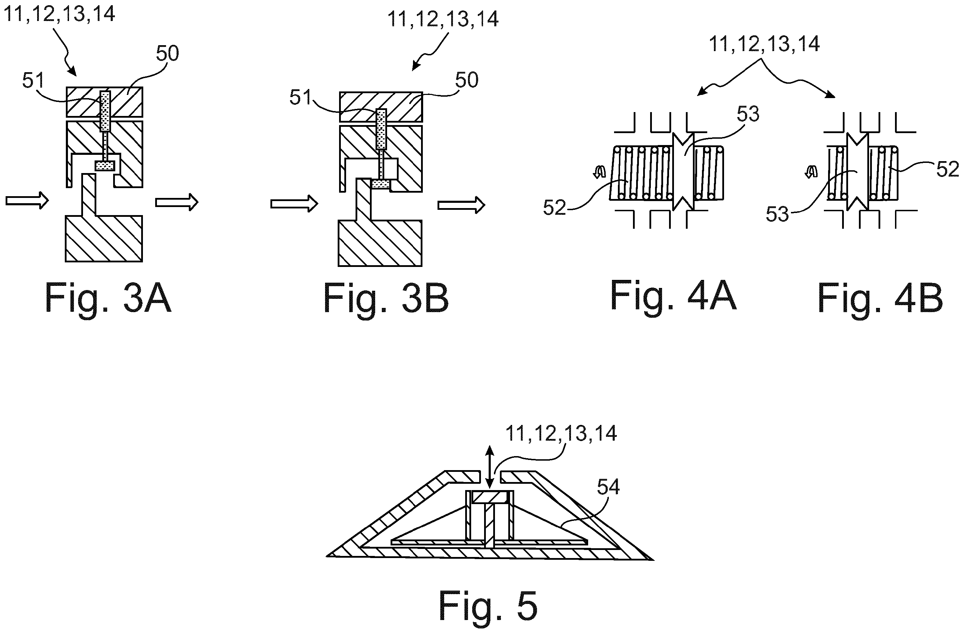

Hinsichtlich der Ausführung der ersten bis vierten Ventile 11, 12, 13, 14 bestehen keine Beschränkungen. In den Figuren 3A und 3B ist ein entsprechendes Ventil 11, 12, 13, 14 als Magnetventil ausgebildet, das eine Spule 50 und einen in dieser angeordneten Kern 51 aufweist, der wiederum mit einem Ventilkörper verbunden ist, der einen Ventilsitz verschließen kann. In Figur 3A ist das Magnetventil in dessen Offenstellung dargestellt, wohingegen in Figur 3B das Magnetventil in dessen Schließstellung dargestellt ist.

In den Figuren 4A und 4B ist ein Ventil 11, 12, 13, 14 dargestellt, bei dem ein Ventilkörper 53 auf einer Spindel 52 angeordnet ist. Durch eine Drehbewegung der Spindel 52 wird die Position des Ventilkörpers 53 derart verändert, dass die unterschiedlichen Anschlüsse des Ventilmoduls 1 entweder geöffnet sein können oder mittels des Ventilkörpers 53 verschlossen werden können.

Figur 5 zeigt eine nochmals weitere Ausgestaltung eines Ventils 11, 12, 13, 14, das als Formgedächtnis-Ventil 11, 12, 13, 14 ausgebildet ist. Das Formgedächtnis-Ventil 11, 12, 13, 14 weist dabei ein Formgedächtnisbauteil 54 auf, das mit einem Ventilkörper verbunden ist, so dass nach entsprechender Bestromung oder Aufheizung des Formgedächtnisbauteils 54 der Ventilkörper eine Ventilöffnung entweder verschließt oder von dieser beabstandet ist.

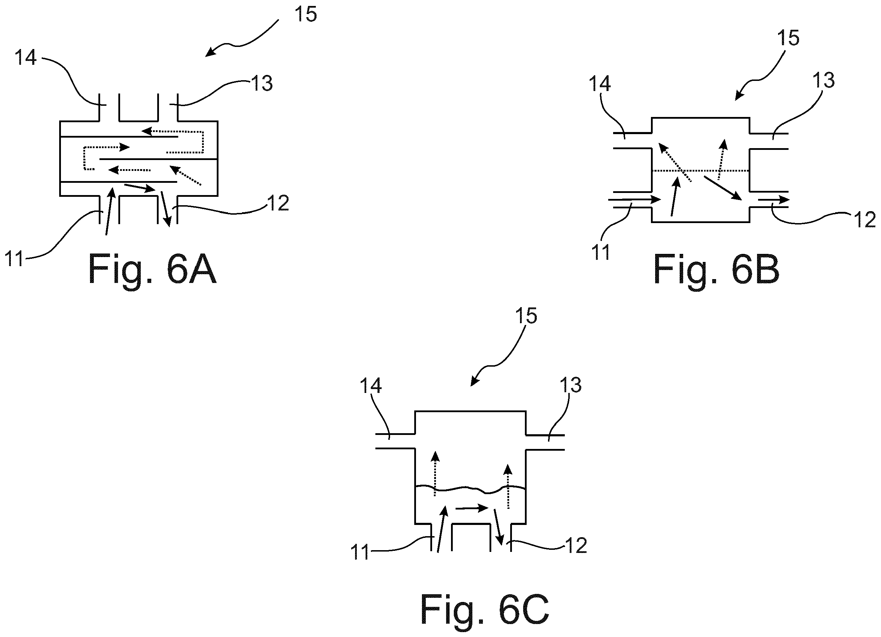

In den Figuren 6A bis 6C sind unterschiedliche Ausgestaltungen eines Flüssigkeits-Dampf-Abscheiders 15 dargestellt. Bei dem in Figur 6A dargestellten Flüssigkeits-Dampf-Abscheider 15 weist dieser einen labyrinthartigen Fluidpfad auf, so dass über den ersten Anschluss 11 keine Flüssigkeit zu dem dritten Anschluss 13 und dem vierten Anschluss 14 gelangen kann. Hingegen ist ein Gasaustausch zwischen sämtlichen Anschlüssen 11-14 weiterhin ermöglicht.

Bei dem in Figur 6B dargestellten Flüssigkeit-Dampf-Abscheider 15 weist dieser eine Membran 16 auf, die den ersten Anschluss 11 von dem dritten Anschluss 13 und dem vierten Anschluss 14 trennt. Die Membran bewirkt, dass Betriebsflüssigkeit über den ersten Anschluss 11 nicht zu dem dritten Anschluss 13 und dem vierten Anschluss 14 gelangen kann. Hingegen kann Flüssigkeit weiterhin von dem ersten Anschluss 11 zu dem zweiten Anschluss 12 gelangen. Darüber hinaus ist ein Gasaustausch zwischen sämtlichen Anschlüssen 11-14 durch die Membran 16 ermöglicht.

In Figur 6C ist ein Flüssigkeits-Dampf-Abscheider 15 dargestellt, bei dem sich innerhalb eines Gehäuses des Flüssigkeits-Dampf-Abscheiders eine Flüssigkeitssäule bildet, wobei der erste Anschluss 11 und der zweite Anschluss 12 in dieser Flüssigkeitssäule münden. Der dritte Anschluss 13 und der vierte Anschluss 14 befinden sich oberhalb der Flüssigkeitssäule, sodass eine Ausperlmöglichkeit von Gasen bzw. Dämpfen, die über den ersten Anschluss 11 in die Flüssigkeitssäule eingeleitet werden, über den dritten Anschluss 13 und dem vierten Anschluss 14 ermöglicht ist.

In den Figuren 6A, 6B und 6C sind die jeweiligen Flüssigkeits-Dampf-Abscheider 15 jeweils in Fluidverbindung mit den vier Anschlüssen 11, 12, 13, 14 des Ventilmoduls 1 gezeigt. Diese Fluidverbindung kann selbstverständlich auch so wie in den Figuren 1A bis 2E dargestellt ausgebildet sein, so dass der erste Anschluss 11 und der zweite Anschluss 12 über eine gemeinsame Fluidverbindung und der dritte Anschluss 13 und der vierte Anschluss 14 über eine andere gemeinsame Fluidverbindung jeweils mit dem Flüssigkeits-Dampf-Abscheider 15 fluidverbunden sind.

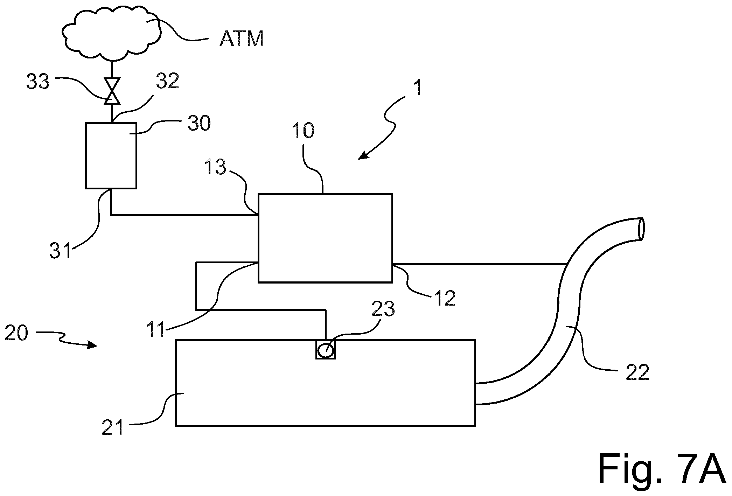

In Figur 7A ist ein Betriebsflüssigkeitsbehältersystem 100 für ein Kraftfahrzeug mit einer Brennkraftmaschine 40 gemäß einer weiteren Ausführungsform der vorliegenden Erfindung gezeigt. Das in Figur 7A dargestellte Betriebsflüssigkeitsbehältersystem 100 unterscheidet sich von den in den Figuren 1A bis 2E dargestellten Betriebsflüssigkeitsbehältersystemen 100 dadurch, dass das Ventilmodul 10 keinen vierten Anschluss zum Verbinden mit dem Ansaugtrakt einer Brennkraftmaschine 40 aufweist.

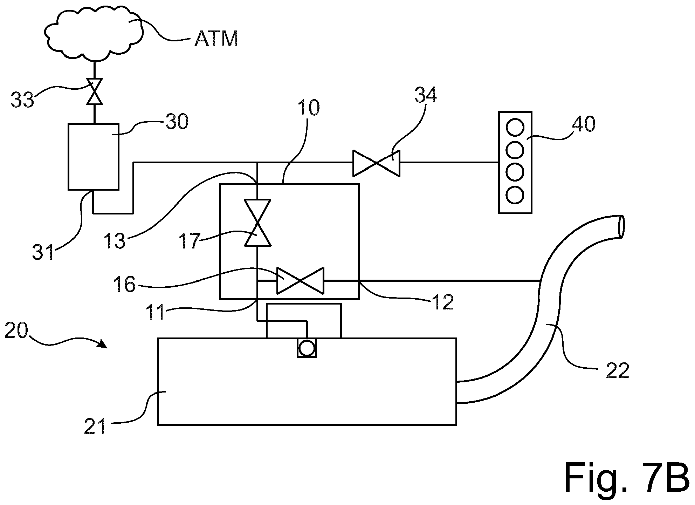

In Figur 7B ist ein möglicher Aufbau des Ventilmoduls 10 gezeigt. Zwischen dem ersten Anschluss 11 und dem zweiten Anschluss 12 ist eine erste Ventilvorrichtung 16 angeordnet, die mit dem ersten Anschluss 11 und dem zweiten Anschluss 12 fluidverbunden ist. Die erste Ventilvorrichtung 16 ist zwischen einer Offenstellung, in der ein Fluidfluss zwischen dem ersten Anschluss 11 und dem zweiten Anschluss 12 durch die erste Ventilvorrichtung 16 ermöglicht ist, und einer Schließstellung, in der ein Fluidfluss zwischen dem ersten Anschluss 11 und dem zweiten Anschluss 12 durch die erste Ventilvorrichtung 17 unterbunden ist, betätigbar. Ferner ist zwischen dem ersten Anschluss 11 und dem dritten Anschluss 13 eine zweite Ventilvorrichtung 17 angeordnet, die mit dem ersten Anschluss 11 und dem dritten Anschluss 13 fluidverbunden ist. Dabei ist die zweite Ventilvorrichtung 17 zwischen einer Offenstellung, in der ein Fluidfluss zwischen dem ersten Anschluss 11 und dem dritten Anschluss 13 durch die zweite Ventilvorrichtung 17 ermöglicht ist, und einer Schließstellung, in der ein Fluidfluss zwischen dem ersten Anschluss 11 und dem dritten Anschluss 13 durch die zweite Ventilvorrichtung 17 unterbunden ist, betätigbar.

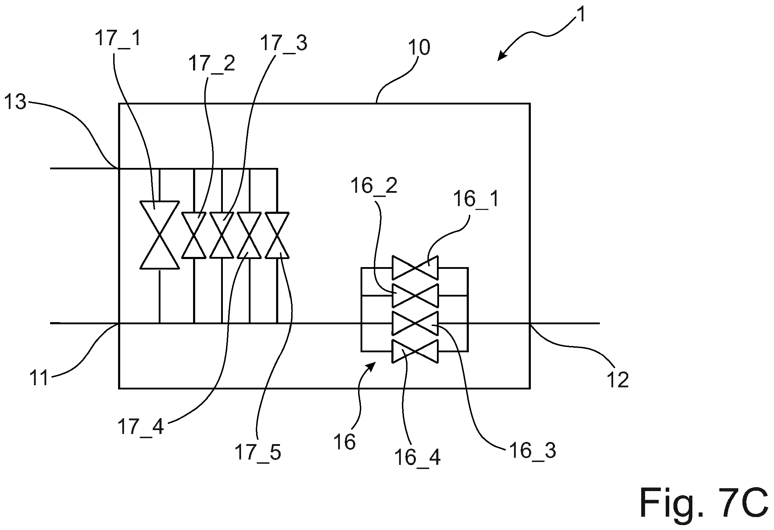

In Figur 7C ist ein Ventilmodul 1 gemäß einer weiteren Ausführungsform der vorliegenden Erfindung in Alleinstellung dargestellt. Das in Figur 7C dargestellte Ventilmodul 1 kann beispielsweise bei den in den Figuren 7A und 7B gezeigten Betriebsflüssigkeitsbehältersystemen 100 verwendet werden.

Das Ventilmodul 1 ist derart ausgebildet, dass die erste Ventilvorrichtung 16 zumindest zwei erste Ventileinrichtungen 16_1, 16_2, 16_3, 16_4 aufweist, die miteinander parallel fluidverbunden sind. In dem dargestellten Ausführungsbeispiel weist die erste Ventilvorrichtung 16 vier erste Ventileinrichtungen 16_1, 16_2, 16_3, 16_4 auf. Dabei ist jede erste Ventileinrichtung 16_1, 16_2, 16_3, 16_4 zwischen einer Offenstellung und einer Schließstellung betätigbar.

Die zweite Ventilvorrichtung 17 des in Figur 7C dargestellten Ventilmoduls 1 weist zumindest zwei zweite Ventileinrichtungen 17_1, 17_2, 17_3, 17_4, 17_5 auf, die miteinander parallel fluidverbunden sind. In dem dargestellten Ausführungsbeispiel weist die zweite Ventilvorrichtung 17 fünf zweite Ventileinrichtungen 17_1, 17_2, 17_3, 17_4, 17_5 auf. Dabei ist jede zweite Ventileinrichtung 17_1, 17_2, 17_3, 17_4, 17_5 ist zwischen einer Offenstellung und einer Schließstellung betätigbar.

Die ersten Ventileinrichtungen 16_1, 16_2, 16_3, 16_4 und die zweiten Ventileinrichtungen 17_1, 17_2, 17_3, 17_4, 17_5 können so wie in den Figuren 3A bis 5 dargestellt ausgebildet sein, so dass auf die entsprechende obige Beschreibung verwiesen wird.

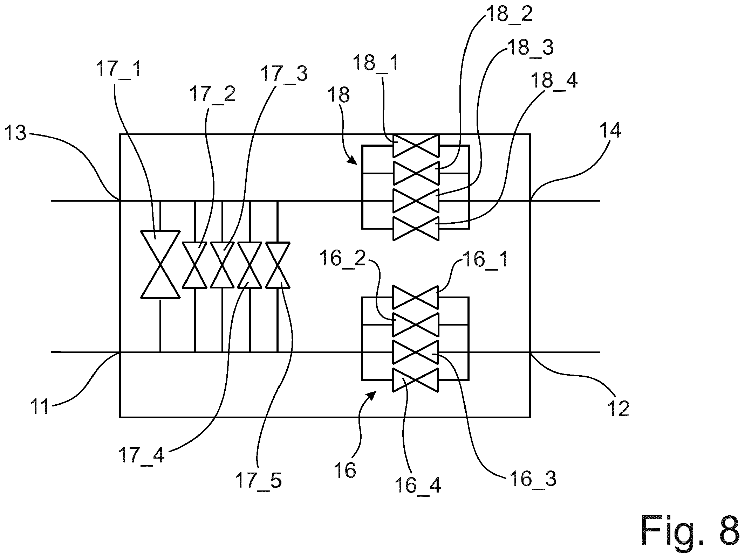

In Figur 8 ist ein Ventilmodul 1 gemäß einer weiteren Ausführungsform der vorliegenden Erfindung in Alleinstellung dargestellt. Das in Figur 8 dargestellte Ventilmodul 1 kann beispielsweise bei dem in Figur 1A gezeigten Betriebsflüssigkeitsbehältersystemen 100 verwendet werden.

Das Ventilmodul 1 ist derart ausgebildet, dass eine erste Ventilvorrichtung 16 zumindest zwei erste Ventileinrichtungen 16_1, 16_2, 16_3, 16_4 aufweist, die miteinander parallel fluidverbunden sind. In dem dargestellten Ausführungsbeispiel weist die erste Ventilvorrichtung 16 vier erste Ventileinrichtungen 16_1, 16_2, 16_3, 16_4 auf. Dabei ist jede erste Ventileinrichtung 16_1, 16_2, 16_3, 16_4 zwischen einer Offenstellung und einer Schließstellung betätigbar.

Eine zweite Ventilvorrichtung 17 des in Figur 8 dargestellten Ventilmoduls 1 weist zumindest zwei zweite Ventileinrichtungen 17_1, 17_2, 17_3, 17_4, 17_5 auf, die miteinander parallel fluidverbunden sind. In dem dargestellten Ausführungsbeispiel weist die zweite Ventilvorrichtung 17 fünf zweite Ventileinrichtungen 17_1, 17_2, 17_3, 17_4, 17_5 auf. Dabei ist jede zweite Ventileinrichtung 17_1, 17_2, 17_3, 17_4, 17_5 ist zwischen einer Offenstellung und einer Schließstellung betätigbar.

Eine dritte Ventilvorrichtung 18 des in Figur 8 dargestellten Ventilmoduls 1 weist zumindest zwei dritte Ventileinrichtungen 18_1, 18_2, 18_3, 18_4, 18_5 auf, die miteinander parallel fluidverbunden sind. In dem dargestellten Ausführungsbeispiel weist die dritte Ventilvorrichtung 18 vier dritte Ventileinrichtungen 18_1, 18_2, 18_3, 18_4 auf. Dabei ist jede dritte Ventileinrichtung 18_1, 18_2, 18_3, 18_4 zwischen einer Offenstellung und einer Schließstellung betätigbar.

Die ersten Ventileinrichtungen 16_1, 16_2, 16_3, 16_4, die zweiten Ventileinrichtungen 17_1, 17_2, 17_3, 17_4, 17_5 und die dritten Ventileinrichtungen 18_1, 18_2, 18_3, 18_4 können so wie in den Figuren 3A bis 5 dargestellt ausgebildet sein, so dass auf die entsprechende obige Beschreibung verwiesen wird.

### Bezugszeichenliste

- 1: Ventilmodul
- 10: Gehäuse (des Ventilmoduls)
- 11: erster Anschluss / Eingangsanschluss / erstes Ventil / Eingangsventil (des Ventilmoduls)
- 12: zweiter Anschluss / zweites Ventil (des Ventilmoduls)
- 13: dritter Anschluss / drittes Ventil (des Ventilmoduls)
- 14: vierter Anschluss / viertes Ventil (des Ventilmoduls)
- 15: Flüssigkeits-Dampf-Abscheider / Tropfenabscheider (des Ventilmoduls)
- 16: erste Ventilvorrichtung
- 16_1: erste Ventileinrichtung
- 16_2: erste Ventileinrichtung
- 16_3: erste Ventileinrichtung
- 16_4: erste Ventileinrichtung
- 17: zweite Ventilvorrichtung
- 17_ 1: zweite Ventileinrichtung
- 17_2: zweite Ventileinrichtung
- 17_3: zweite Ventileinrichtung
- 17_4: zweite Ventileinrichtung
- 17_5: zweite Ventileinrichtung
- 18: dritte Ventilvorrichtung
- 18_1: dritte Ventileinrichtung
- 18_2: dritte Ventileinrichtung
- 18_3: dritte Ventileinrichtung
- 18_4: dritte Ventileinrichtung
- 19_1: Überdruckschutzventil
- 19_2: Unterdruckschutzventil
- 20: Betriebsflüssigkeitsbehälter / Kraftstoffbehälter
- 21: Betriebsflüssigkeitsbehälterinnenraum
- 22: Einfüllrohr
- 23: Entlüftungsventil / Roll-Over-Ventil (des Betriebsflüssigkeitsbehälters)
- 24: Entlüftungsleitung
- 30: Adsorptionsfilter / Aktivkohlefilter
- 31: Eingangsanschluss (des Adsorptionsfilters)
- 32: Ausgangsanschluss (des Adsorptionsfilters)
- 33: Diagnoseventil / OBD-Ventil
- 34: Absperrventil
- 40: Brennkraftmaschine / Motor
- 41: Ansaugtrakt-Eingangsanschluss (der Brennkraftmaschine)
- 50: Spule (eines Magnetventils)
- 51: Kern (eines Magnetventils)
- 52: Spindel (eines Ventils mit Spindelantrieb)
- 53: Ventilkörper (eines Ventils mit Spindelantrieb)
- 54: Formgedächtnisbauteil (eines Formgedächtnis-Ventils)
- 100: Betriebsflüssigkeitsbehältersystem
- ATM: Atmosphäre

## Patentansprüche

1. Ventilmodul (1) für ein Betriebsflüssigkeitsbehältersystem (100), wobei das Ventilmodul (1) folgendes aufweist:
- das Ventilmodul (1) weist ein Gehäuse (10) auf;
- das Gehäuse (10) weist einen ersten Anschluss (11) zur Fluidverbindung mit einem Betriebsflüssigkeitsbehälterinnenraum (21) auf;
- das Gehäuse (10) weist einen zweiten Anschluss (12) zur Fluidverbindung mit einem Einfüllrohr (22) auf; und
- das Gehäuse (10) weist einen dritten Anschluss (13) zur zumindest mittelbaren Fluidverbindung mit der Atmosphäre auf;
wobei das Ventilmodul (1) folgende weitere Merkmale aufweist
- der erste Anschluss (11) ist innerhalb des Gehäuses (10) jeweils mit dem zweiten Anschluss (12) und dem dritten Anschluss (13) fluidverbunden;
- der zweite Anschluss (12) ist innerhalb des Gehäuses (10) mit dem dritten Anschluss (13) fluidverbunden;
**gekennzeichnet durch**:
- der erste Anschluss (11) und der zweite Anschluss (12) und der dritte Anschluss (13) sind jeweils unabhängig voneinander jeweils zwischen einer Offenstellung, bei der eine Fluidkommunikation durch den jeweiligen Anschluss (11, 12, 13) hindurch ermöglicht ist, und einer Schließstellung, bei der eine Fluidkommunikation durch den jeweiligen Anschluss (11, 12, 13) hindurch unterbunden ist, verstellbar.

2. Ventilmodul (1) nach Anspruch 1, **gekennzeichnet durch** folgende Merkmale:
- zwischen dem ersten Anschluss (11) und dem zweiten Anschluss (12) ist eine erste Ventilvorrichtung (16) angeordnet, die mit dem ersten Anschluss (11) und dem zweiten Anschluss (12) fluidverbunden ist;
- die erste Ventilvorrichtung (16) ist zwischen einer Offenstellung, in der ein Fluidfluss zwischen dem ersten Anschluss (11) und dem zweiten Anschluss (12) durch die erste Ventilvorrichtung (16) ermöglicht ist, und einer Schließstellung, in der ein Fluidfluss zwischen dem ersten Anschluss (11) und dem zweiten Anschluss (12) durch die erste Ventilvorrichtung (17) unterbunden ist, betätigbar;
- zwischen dem ersten Anschluss (11) und dem dritten Anschluss (13) ist eine zweite Ventilvorrichtung (17) angeordnet, die mit dem ersten Anschluss (11) und dem dritten Anschluss (13) fluidverbunden ist; und
- die zweite Ventilvorrichtung (17) ist zwischen einer Offenstellung, in der ein Fluidfluss zwischen dem ersten Anschluss (11) und dem dritten Anschluss (13) durch die zweite Ventilvorrichtung (17) ermöglicht ist, und einer Schließstellung, in der ein Fluidfluss zwischen dem ersten Anschluss (11) und dem dritten Anschluss (13) durch die zweite Ventilvorrichtung (17) unterbunden ist, betätigbar.

3. Ventilmodul (1) nach Anspruch 2, **gekennzeichnet durch** die folgenden Merkmale:
- die erste Ventilvorrichtung (16) weist zumindest zwei erste Ventileinrichtungen (16_1, 16_2, 16_3, 16_4) auf, die miteinander parallel fluidverbunden sind; und
- jede erste Ventileinrichtung (16_1, 16_2, 16_3, 16_4) ist zwischen einer Offenstellung und einer Schließstellung betätigbar.

4. Ventilmodule (1) nach Anspruch 3, **dadurch gekennzeichnet, dass** die zumindest zwei ersten Ventileinrichtungen (16_1, 16_2, 16_3, 16_4) voneinander verschiedene freie Öffnungsquerschnittsflächen aufweisen.

5. Ventilmodul (1) nach einem der Ansprüche 2 bis 4, **gekennzeichnet durch** die folgenden Merkmale:
- die zweite Ventilvorrichtung (17) weist zumindest zwei zweite Ventileinrichtungen (17_1, 17_2, 17_3, 17_4) auf, die miteinander parallel fluidverbunden sind; und
- jede zweite Ventileinrichtung (17_1, 17_2, 17_3, 17_4) ist zwischen einer Offenstellung und einer Schließstellung betätigbar.

6. Ventilmodul (1) nach Anspruch 5, **dadurch gekennzeichnet, dass** die zumindest zwei zweiten Ventileinrichtungen (17_1, 17_2, 17_3, 17_4) voneinander verschiedene freie Öffnungsquerschnittsflächen aufweisen.

7. Ventilmodul (1) nach einem der Ansprüche 2 bis 6, **dadurch gekennzeichnet, dass** die erste Ventilvorrichtung (16) und/oder die zweite Ventilvorrichtung (17) elektrisch zwischen der Offenstellung und der Schließstellung betätigbar ist/sind.

8. Ventilmodul (1) nach einem der vorhergehenden Ansprüche, **gekennzeichnet durch** die folgenden Merkmale:
- das Gehäuse (10) weist einen vierten Anschluss (14) zur Fluidverbindung mit einem Ansaugtrakt einer Brennkraftmaschine (40) auf;
- der erste Anschluss (11) ist innerhalb des Gehäuses (10) mit dem vierten Anschluss (14) fluidverbunden;
- der zweite Anschluss (12) ist innerhalb des Gehäuses (10) mit dem vierten Anschluss (14) fluidverbunden;
- der dritte Anschluss (13) ist innerhalb des Gehäuses (10) mit dem vierten Anschluss (14) fluidverbunden; und
- der vierte Anschluss (14) ist zwischen einer Offenstellung, bei der eine Fluidkommunikation durch den vierten Anschluss (14) hindurch ermöglicht ist, und einer Schließstellung, bei der eine Fluidkommunikation durch den vierten Anschluss (14) hindurch unterbunden ist, verstellbar.

9. Ventilmodul (1) nach Anspruch 8, **gekennzeichnet durch** folgende Merkmale:
- zwischen dem dritten Anschluss (13) und dem vierten Anschluss (14) ist eine dritte Ventilvorrichtung (18) angeordnet, die mit dem dritten Anschluss (13) und dem vierten Anschluss (14) fluidverbunden ist; und
- die dritte Ventilvorrichtung (18) ist zwischen einer Offenstellung, in der ein Fluidfluss zwischen dem dritten Anschluss (13) und dem vierten Anschluss (14) durch die dritte Ventilvorrichtung (18) ermöglicht ist, und einer Schließstellung, in der ein Fluidfluss zwischen dem dritten Anschluss (13) und dem vierten Anschluss (14) durch die dritte Ventilvorrichtung (18) unterbunden ist, betätigbar.

10. Ventilmodul (1) nach Anspruch 9, **gekennzeichnet durch** die folgenden Merkmale:
- die dritte Ventilvorrichtung (18) weist zumindest zwei dritte Ventileinrichtungen (18_1, 18_2, 18_3, 18_4) auf, die miteinander parallel fluidverbunden sind; und
- jede dritte Ventileinrichtung (18_1, 18_2, 18_3, 18_4) ist zwischen einer Offenstellung und einer Schließstellung betätigbar.

11. Ventilmodule (1) nach Anspruch 10, **dadurch gekennzeichnet, dass** die zumindest zwei dritten Ventileinrichtungen (18_1, 18_2, 18_3, 18_4) voneinander verschiedene freie Öffnungsquerschnittsflächen aufweisen.

12. Ventilmodul (1) nach einem der vorhergehenden Ansprüche, **dadurch gekennzeichnet, dass** der erste Anschluss (11) und/oder der zweite Anschluss (12) und/oder der dritte Anschluss (13) und oder der vierte Anschluss (14) jeweils elektrisch zwischen der Offenstellung und der Schließstellung betätigbar ist/sind.

13. Ventilmodul (1) nach einem der vorhergehenden Ansprüchen, **dadurch gekennzeichnet, dass** der erste Anschluss (11) als erstes Ventil (11) und/oder der zweite Anschluss (12) als zweites Ventil (12) und/oder der dritte Anschluss (13) als drittes Ventil (13) und/oder der vierte Anschluss (14) als viertes Ventil (14) ausgebildet ist/sind.

14. Ventilmodul (1) nach Anspruch 13, **dadurch gekennzeichnet, dass** das erste Ventil (11) und/oder das zweite Ventil (12) und/oder das dritte Ventil (13) und/oder das vierte Ventil (14) jeweils als Proportionalventil ausgebildet ist/sind und kontinuierlich zwischen Offenstellung und Schließstellung elektrisch verstellbar ist/sind.

15. Ventilmodul (1) nach einem der vorhergehenden Ansprüchen, **dadurch gekennzeichnet, dass** der erste Anschluss (11) und/oder der zweite Anschluss (12) und/oder der dritte Anschluss (13) und/oder der vierte Anschluss (14) diskret zwischen dessen jeweiliger Offenstellung und dessen jeweiliger Schließstellung verstellbar ist/sind.

16. Ventilmodul (1) nach einem der vorhergehenden Ansprüche, **dadurch gekennzeichnet, dass** das Ventilmodul (1) einen Flüssigkeits-Dampf-Abscheider (15) aufweist, über den der erste Anschluss (11) und der zweite Anschluss (12) mit dem dritten Anschluss (13) und dem vierten Anschluss (14) fluidverbunden sind.

17. Ventilmodul (1) nach einem der vorhergehenden Ansprüche, **gekennzeichnet durch** die folgenden Merkmale:
- das Verhältnis einer ersten Querschnittsfläche des ersten Anschlusses (11) zu einer zweiten Querschnittsfläche des zweiten Anschlusses (12) beträgt zwischen 0,64 und 41; und/oder
- das Verhältnis einer ersten Querschnittsfläche des ersten Anschlusses (11) zu einer vierten Querschnittsfläche des vierten Anschlusses (14) beträgt zwischen 1 und 7,3; und/oder
- das Verhältnis einer ersten Querschnittsfläche des ersten Anschlusses (11) zu einer dritten Querschnittsfläche des dritten Anschlusses (13) beträgt zwischen 0,5 und 4.

18. Betriebsflüssigkeitsbehältersystem (100) für ein Kraftfahrzeug mit einer Brennkraftmaschine (40), aufweisend:
- einen Betriebsflüssigkeitsbehälter (20), in dessen Betriebsflüssigkeitsbehälterinnenraum (21) ein Einfüllrohr (22) zum Befüllen des Betriebsflüssigkeitsbehälterinnenraums (21) mit einer Betriebsflüssigkeit mündet,
wobei das Betriebsflüssigkeitsbehältersystem (100) **dadurch gekennzeichnet ist, dass** dieses folgendes aufweist:
- ein Ventilmodul (1) nach einem der Ansprüche 1 bis 17, wobei der erste Anschluss (11) mit dem Betriebsflüssigkeitsbehälterinnenraum (21), der zweite Anschluss (12) mit dem Einfüllrohr (22) und der dritte Anschluss (13) zumindest mittelbar mit der Atmosphäre fluidverbunden ist.

19. Betriebsflüssigkeitsbehältersystem (100) nach Anspruch 18, **dadurch gekennzeichnet, dass** das Betriebsflüssigkeitsbehältersystem (100) ein Ventilmodul (1) mit den Merkmalen des Anspruchs 8 aufweist, wobei der vierte Anschluss (14) mit einem Ansaugtrakt der Brennkraftmaschine (40) fluidverbunden ist.

20. Betriebsflüssigkeitsbehältersystem (100) nach Anspruch 18 oder 19, **gekennzeichnet durch** die folgenden Merkmale:
- das Betriebsflüssigkeitsbehältersystem (100) weist ein Adsorptionsfilter (30) zur Adsorption von sich in der Dampfphase befindlicher Betriebsflüssigkeit auf; und
- der dritte Anschluss (13) des Ventilmoduls (1) ist mit dem Adsorptionsfilter (30) fluidverbunden.

21. Betriebsflüssigkeitsbehältersystem (100) nach einem der Ansprüche 18 bis 20, **gekennzeichnet durch** die folgenden Merkmale:
- das Betriebsflüssigkeitsbehältersystem (100) weist ein Ventilmodul (1) mit den Merkmalen des Anspruchs 7 auf;
- das Betriebsflüssigkeitsbehältersystem (100) weist eine elektronische Steuerungseinrichtung auf, die mit dem Ventilmodul (1) über eine Datenleitung zum Austausch von Daten gekoppelt ist; und
- die erste Ventilvorrichtung (16) und die zweite Ventilvorrichtung (17) sind mittels von der Steuerungseinrichtung ausgegebenen Steuersignalen zwischen deren jeweiligen Offenstellungen und deren jeweiligen Schließstellungen betätigbar.

22. Betriebsflüssigkeitsbehältersystem (100) nach einem der Ansprüche 18 bis 21, **gekennzeichnet durch** die folgenden Merkmale:
- das Betriebsflüssigkeitsbehältersystem (100) weist ein Ventilmodul (1) mit den Merkmalen des Anspruchs 12 auf;
- das Betriebsflüssigkeitsbehältersystem (100) weist eine elektronische Steuerungseinrichtung auf, die mit dem Ventilmodul (1) über eine Datenleitung zum Austausch von Daten gekoppelt ist; und
- der erste Anschluss (11), der zweite Anschluss (12), der dritte Anschluss (13) und der vierte Anschluss (14) sind mittels von der Steuerungseinrichtung ausgegebenen Steuersignalen zwischen deren jeweiligen Offenstellungen und deren jeweiligen Schließstellungen betätigbar.

23. Betriebsflüssigkeitsbehältersystem (100) nach Anspruch 21 oder 22, **gekennzeichnet durch** die folgenden Merkmale:
- das Betriebsflüssigkeitsbehältersystem (100) weist zumindest einen Füllstandsensor zum Ermitteln eines Füllstands der Betriebsflüssigkeit im Betriebsflüssigkeitsbehälter (20) auf; und
- die elektronische Steuerungseinrichtung ist mit dem Füllstandsensor über eine Datenleitung zum Empfangen von Daten gekoppelt.

24. Betriebsflüssigkeitsbehältersystem (100) nach einem der Ansprüche 18 bis 23, **gekennzeichnet durch** folgende Merkmale:
- das Betriebsflüssigkeitsbehältersystem (100) weist ein Überdruckschutzventil (19_1) auf, das in einer Fluidleitung zwischen dem Betriebsflüssigkeitsbehälterinnenraum (21) und der Atmosphäre angeordnet ist;
- das Überdruckschutzventil (19_1) ist zwischen einer Offenstellung, in der ein Gasaustausch durch das Überdruckschutzventil (19_1) ermöglicht ist, und einer Schließstellung, in der ein Gasaustausch durch das Überdruckschutzventil (19_1) unterbunden ist, beweglich;
- das Überdruckschutzventil (19_1) befindet sich in dessen Schließstellung, wenn der Innendruck im Betriebsflüssigkeitsbehälterinnenraum (21) kleiner als der Maximaldruck ist; und
- das Überdruckschutzventil (19_1) wird in dessen Offenstellung überführt, wenn der Innendruck im Betriebsflüssigkeitsbehälterinnenraum (21) größer als der Maximaldruck ist.

25. Betriebsflüssigkeitsbehältersystem (100) nach einem der Ansprüche 18 bis 24, **gekennzeichnet durch** folgende Merkmale:
- das Betriebsflüssigkeitsbehältersystem (100) weist ein Unterdruckschutzventil (19_2) auf, das in einer Fluidleitung zwischen dem Betriebsflüssigkeitsbehälterinnenraum (21) und der Atmosphäre angeordnet ist;
- das Unterdruckschutzventil (19_2) ist zwischen einer Offenstellung, in der ein Gasaustausch durch das Unterdruckschutzventil (19_2) ermöglicht ist, und einer Schließstellung, in der ein Gasaustausch durch das Unterdruckschutzventil (19_2) unterbunden ist, beweglich;
- das Unterdruckschutzventil (19_2) befindet sich in dessen Schließstellung, wenn der Innendruck im Betriebsflüssigkeitsbehälterinnenraum größer als der Minimaldruck ist; und
- das Unterdruckschutzventil (19_2) wird in dessen Offenstellung überführt, wenn der Innendruck im Betriebsflüssigkeitsbehälterinnenraum kleiner als der Minimaldruck ist.

## Claims

1. A valve module (1) for an operating liquid container system (100), wherein the valve module (1) has the following:
- the valve module (1) has a housing (10);
- the housing (10) has a first port (11) for fluidic connection to an operating liquid container interior (21);
- the housing (10) has a second port (12) for fluidic connection to a filler pipe (22); and
- the housing (10) has a third port (13) for at least indirect fluidic connection to the atmosphere;
wherein the valve module (1) exhibits the following further features:
- the first port (11) is fluidically connected, within the housing (10), in each case to the second port (12) and to the third port (13);
- the second port (12) is fluidically connected, within the housing (10), to the third port (13);
**characterized by**:
- the first port (11) and the second port (12) and the third port (13) are each independently of one another adjustable in each case between an open position, in which fluid communication through the respective port (11, 12, 13) is made possible, and a closed position, in which fluid communication through the respective port (11, 12, 13) is prevented.

2. The valve module (1) as claimed in claim 1, **characterized by** the following features:
- a first valve apparatus (16) is arranged between the first port (11) and the second port (12) and is fluidically connected to the first port (11) and to the second port (12);
- the first valve apparatus (16) is actuatable between an open position, in which a fluid flow between the first port (11) and the second port (12) is made possible by the first valve apparatus (16), and a closed position, in which a fluid flow between the first port (11) and the second port (12) is prevented by the first valve apparatus (17);
- a second valve apparatus (17) is arranged between the first port (11) and the third port (13) and is fluidically connected to the first port (11) and to the third port (13); and
- the second valve apparatus (17) is actuatable between an open position, in which a fluid flow between the first port (11) and the third port (13) is made possible by the second valve apparatus (17), and a closed position, in which a fluid flow between the first port (11) and the third port (13) is prevented by the second valve apparatus (17).

3. The valve module (1) as claimed in claim 2, **characterized by** the following features:
- the first valve apparatus (16) has at least two first valve devices (16_1, 16_2, 16_3, 16_4) which are fluidically connected to one another in parallel; and
- each first valve device (16_1, 16_2, 16_3, 16_4) is actuatable between an open position and a closed position.

4. The valve modules (1) as claimed in claim 3, **characterized in that** the at least two first valve devices (16_1, 16_2, 16_3, 16_4) have mutually different free opening cross-sectional areas.

5. The valve module (1) as claimed in any of claims 2 to 4, **characterized by** the following features:
- the second valve apparatus (17) has at least two second valve devices (17_1, 17_2, 17_3, 17_4) which are fluidically connected to one another in parallel; and
- each second valve device (17_1, 17_2, 17_3, 17_4) is actuatable between an open position and a closed position.

6. The valve module (1) as claimed in claim 5, **characterized in that** the at least two second valve devices (17_1, 17_2, 17_3, 17_4) have mutually different free opening cross-sectional areas.

7. The valve module (1) as claimed in any of claims 2 to 6, **characterized in that** the first valve apparatus (16) and/or the second valve apparatus (17) are/is electrically actuatable between the open position and the closed position.

8. The valve module (1) as claimed in any of the preceding claims, **characterized by** the following features:
- the housing (10) has a fourth port (14) for fluidic connection to an intake tract of an internal combustion engine (40) ;
- the first port (11) is fluidically connected, within the housing (10), to the fourth port (14);
- the second port (12) is fluidically connected, within the housing (10), to the fourth port (14);
- the third port (13) is fluidically connected, within the housing (10), to the fourth port (14);
- the fourth port (14) is adjustable between an open position, in which fluid communication through the fourth port (14) is made possible, and a closed position, in which fluid communication through the fourth port (14) is prevented.

9. The valve module (1) as claimed in claim 8, **characterized by** the following features:
- a third valve apparatus (18) is arranged between the third port (13) and the fourth port (14) and is fluidically connected to the third port (13) and to the fourth port (14); and
- the third valve apparatus (18) is actuatable between an open position, in which a fluid flow between the third port (13) and the fourth port (14) is made possible by the third valve apparatus (18), and a closed position, in which a fluid flow between the third port (13) and the fourth port (14) is prevented by the third valve apparatus (18).

10. The valve module (1) as claimed in claim 9, **characterized by** the following features:
- the third valve apparatus (18) has at least two third valve devices (18_1, 18_2, 18_3, 18_4) which are fluidically connected to one another in parallel; and
- each third valve device (18_1, 18_2, 18_3, 18_4) is actuatable between an open position and a closed position.

11. The valve module (1) as claimed in claim 10, **characterized in that** the at least two third valve devices (18_1, 18_2, 18_3, 18_4) have mutually different free opening cross-sectional areas.

12. The valve module (1) as claimed in any of the preceding claims, **characterized in that** the first port (11) and/or the second port (12) and/or the third port (13) and/or the fourth port (14) are/is each actuatable electrically between the open position and the closed position.

13. The valve module (1) as claimed in any of the preceding claims, **characterized in that** the first port (11) is designed as a first valve (11) and/or the second port (12) is designed as a second valve (12) and/or the third port (13) is designed as a third valve (13) and/or the fourth port (14) is designed as a fourth valve (14).

14. The valve module (1) as claimed in claim 13, **characterized in that** the first valve (11) and/or the second valve (12) and/or the third valve (13) and/or the fourth valve (14) are each designed as a proportional valve and are/is electrically adjustable in continuous fashion between an open position and a closed position.

15. The valve module (1) as claimed in any of the preceding claims, **characterized in that** the first port (11) and/or the second port (12) and/or the third port (13) and/or the fourth port (14) are/is adjustable in discrete fashion between the respective open position thereof and the respective closed position thereof.

16. The valve module (1) as claimed in any of the preceding claims, **characterized in that** the valve module (1) has a liquid-vapor separator (15), via which the first port (11) and the second port (12) are fluidically connected to the third port (13) and to the fourth port (14).

17. The valve module (1) as claimed in any of the preceding claims, **characterized by** the following features:
- the ratio of a first cross-sectional area of the first port (11) to a second cross-sectional area of the second port (12) amounts to between 0.64 and 41; and/or
- the ratio of a first cross-sectional area of the first port (11) to a fourth cross-sectional area of the fourth port (14) amounts to between 1 and 7.3; and/or
- the ratio of a first cross-sectional area of the first port (11) to a third cross-sectional area of the third port (13) amounts to between 0.5 and 4.

18. An operating liquid container system (100) for a motor vehicle with an internal combustion engine (40), having:
- an operating liquid container (20), into the operating liquid container interior (21) of which a filler pipe (22) for filling the operating liquid container interior (21) with an operating liquid opens,
wherein the operating liquid container system (100) is **characterized in that** it has the following:
- a valve module (1) as claimed in any of claims 1 to 17, wherein the first port (11) is fluidically connected to the operating liquid container interior (21), the second port (12) is fluidically connected to the filler pipe (22), and the third port (13) is fluidically connected at least indirectly to the atmosphere.

19. The operating liquid container system (100) as claimed in claim 18, **characterized in that** the operating liquid container system (100) has a valve module (1) with the features of claim 8, wherein the fourth port (14) is fluidically connected to an intake tract of the internal combustion engine (40).

20. The operating liquid container system (100) as claimed in claim 18 or 19, **characterized by** the following features:
- the operating liquid container system (100) has an adsorption filter (30) for the adsorption of operating liquid that is present in the vapor phase; and
- the third port (13) of the valve module (1) is fluidically connected to the adsorption filter (30).

21. The operating liquid container system (100) as claimed in any of claims 18 to 20, **characterized by** the following features:
- the operating liquid container system (100) has a valve module (1) with the features of claim 7;
- the operating liquid container system (100) has an electronic control device which is coupled to the valve module (1) via a data line for the exchange of data; and
- the first valve apparatus (16) and the second valve apparatus (17) are actuatable between the respective open positions thereof and the respective closed positions thereof by means of control signals output by the control device.

22. The operating liquid container system (100) as claimed in any of claims 18 to 21, **characterized by** the following features:
- the operating liquid container system (100) has a valve module (1) with the features of claim 12;
- the operating liquid container system (100) has an electronic control device which is coupled to the valve module (1) via a data line for the exchange of data; and
- the first port (11), the second port (12), the third port (13) and the fourth port (14) are actuatable between the respective open positions thereof and the respective closed positions thereof by means of control signals output by the control device.

23. The operating liquid container system (100) as claimed in claim 21 or 22, **characterized by** the following features:
- the operating liquid container system (100) has at least one fill level sensor for determining a fill level of the operating liquid in the operating liquid container (20); and
- the electronic control device is coupled to the fill level sensor via a data line for the receipt of data.

24. The operating liquid container system (100) as claimed in any of claims 18 to 23, **characterized by** the following features:
- the operating liquid container system (100) has an overpressure protection valve (19_1) which is arranged in a fluid line between the operating liquid container interior (21) and the atmosphere;
- the overpressure protection valve (19_1) is movable between an open position, in which an exchange of gas is made possible by the overpressure protection valve (19_1), and a closed position, in which an exchange of gas is prevented by the overpressure protection valve (19_1);
- the overpressure protection valve (19_1) is situated in its closed position if the internal pressure in the operating liquid container interior (21) is lower than the maximum pressure; and
- the overpressure protection valve (19_1) is transferred into the open position thereof if the internal pressure in the operating liquid container interior (21) is higher than the maximum pressure.

25. The operating liquid container system (100) as claimed in any of claims 18 to 24, **characterized by** the following features:
- the operating liquid container system (100) has an underpressure protection valve (19_2) which is arranged in a fluid line between the operating liquid container interior (21) and the atmosphere;
- the underpressure protection valve (19_2) is movable between an open position, in which an exchange of gas is made possible by the underpressure protection valve (19_2), and a closed position, in which an exchange of gas is prevented by the underpressure protection valve (19_2);
- the underpressure protection valve (19_2) is situated in its closed position if the internal pressure in the operating liquid container interior is higher than the minimum pressure; and
- the underpressure protection valve (19_2) is transferred into the open position thereof if the internal pressure in the operating liquid container interior is lower than the minimum pressure.

## Revendications

1. Module de vanne (1) destiné à un système de récipient à liquide de service (100), le module de vanne (1) présentant les caractéristiques suivantes :
- le module de vanne (1) présente un boîtier (10) ;
- le boîtier (10) présente un premier raccord (11) servant à la liaison fluidique avec un espace intérieur de récipient à liquide de service (21) ;
- le boîtier (10) présente un deuxième raccord (12) servant à la liaison fluidique avec un tube de remplissage (22) ; et
- le boîtier (10) présente un troisième raccord (13) servant à la liaison fluidique au moins indirecte avec l'atmosphère ; le module de vanne (1) présentant les autres caractéristiques suivantes :
- le premier raccord (11) est relié de manière fluidique respectivement au deuxième raccord (12) et au troisième raccord (13) à l'intérieur du boîtier (10) ;
- le deuxième raccord (12) est relié de manière fluidique au troisième raccord (13) à l'intérieur du boîtier (10) ; **caractérisé en ce que** :
- le premier raccord (11), le deuxième raccord (12) et le troisième raccord (13) peuvent respectivement être réglés indépendamment les uns des autres respectivement entre une position ouverte, dans laquelle une communication fluidique à travers le raccord respectif (11, 12, 13) est rendue possible, et une position fermée, dans laquelle une communication fluidique à travers le raccord respectif (11, 12, 13) est empêchée.

2. Module de vanne (1) selon la revendication 1, **caractérisé par** les caractéristiques suivantes :
- un premier dispositif de vanne (16) est disposé entre le premier raccord (11) et le deuxième raccord (12) et est relié de manière fluidique au premier raccord (11) et au deuxième raccord (12) ;
- le premier dispositif de vanne (16) peut être actionné entre une position ouverte, dans laquelle un écoulement de fluide entre le premier raccord (11) et le deuxième raccord (12) est rendu possible par le premier dispositif de vanne (16), et une position fermée, dans laquelle un écoulement de fluide entre le premier raccord (11) et le deuxième raccord (12) est empêché par le premier dispositif de vanne (17) ;
- un deuxième dispositif de vanne (17) est disposé entre le premier raccord (11) et le troisième raccord (13) et est relié de manière fluidique au premier raccord (11) et au troisième raccord (13) ; et
- le deuxième dispositif de vanne (17) peut être actionné entre une position ouverte, dans laquelle un écoulement de fluide entre le premier raccord (11) et le troisième raccord (13) est rendu possible par le deuxième dispositif de vanne (17), et une position fermée, dans laquelle un écoulement de fluide entre le premier raccord (11) et le troisième raccord (13) est empêché par le deuxième dispositif de vanne (17).

3. Module de vanne (1) selon la revendication 2, **caractérisé par** les caractéristiques suivantes :
- le premier dispositif de vanne (16) présente au moins deux premiers éléments de vanne (16_1, 16_2, 16_3, 16_4) qui sont reliés l'un à l'autre en parallèle de manière fluidique ; et
- chaque premier élément de vanne (16_1, 16_2, 16_3, 16_4) peut être actionné entre une position ouverte et une position fermée.

4. Modules de vanne (1) selon la revendication 3, **caractérisés en ce que** les au moins deux premiers éléments de vanne (16_1, 16_2, 16_3, 16_4) présentent des surfaces de section transversale à ouverture libre différentes les unes des autres.

5. Module de vanne (1) selon l'une des revendications 2 à 4, **caractérisé par** les caractéristiques suivantes :
- le deuxième dispositif de vanne (17) présente au moins deux deuxièmes éléments de vanne (17_1, 17_2, 17_3, 17_4) qui sont reliés l'un à l'autre en parallèle de manière fluidique ; et
- chaque deuxième élément de vanne (17_1, 17_2, 17_3, 17_4) peut être actionné entre une position ouverte et une position fermée.

6. Module de vanne (1) selon la revendication 5, **caractérisé en ce que** les au moins deux deuxièmes éléments de vanne (17_1, 17_2, 17_3, 17_4) présentent des surfaces de section transversale à ouverture libre différentes les unes des autres.

7. Module de vanne (1) selon l'une des revendications 2 à 6, **caractérisé en ce que** le premier dispositif de vanne (16) et/ou le deuxième dispositif de vanne (17) peuvent être actionnés électriquement entre la position ouverte et la position fermée.

8. Module de vanne (1) selon l'une des revendications précédentes, **caractérisé par** les caractéristiques suivantes :
- le boîtier (10) présente un quatrième raccord (14) servant à la liaison fluidique avec une voie d'aspiration d'un moteur à combustion interne (40) ;
- le premier raccord (11) est relié de manière fluidique au quatrième raccord (14) à l'intérieur du boîtier (10) ;
- le deuxième raccord (12) est relié de manière fluidique au quatrième raccord (14) à l'intérieur du boîtier (10) ;
- le troisième raccord (13) est relié de manière fluidique au quatrième raccord (14) à l'intérieur du boîtier (10) ; et
- le quatrième raccord (14) peut être réglé entre une position ouverte, dans laquelle une communication fluidique à travers le quatrième raccord (14) est rendue possible, et une position fermée, dans laquelle une communication fluidique à travers le quatrième raccord (14) est empêchée.

9. Module de vanne (1) selon la revendication 8, **caractérisé par** les caractéristiques suivantes :
- un troisième dispositif de vanne (18) est disposé entre le troisième raccord (13) et le quatrième raccord (14) et est relié de manière fluidique au troisième raccord (13) et au quatrième raccord (14) ; et
- le troisième dispositif de vanne (18) peut être actionné entre une position ouverte, dans laquelle un écoulement de fluide entre le troisième raccord (13) et le quatrième raccord (14) est rendu possible par le troisième dispositif de vanne (18), et une position fermée, dans laquelle un écoulement de fluide entre le troisième raccord (13) et le quatrième raccord (14) est empêché par le troisième dispositif de vanne (18).

10. Module de vanne (1) selon la revendication 9, **caractérisé par** les caractéristiques suivantes :
- le troisième dispositif de vanne (18) présente au moins deux troisièmes éléments de vanne (18_1, 18_2, 18_3, 18_4) qui sont reliés l'un à l'autre en parallèle de manière fluidique ; et
- chaque troisième élément de vanne (18_1, 18_2, 18_3, 18_4) peut être actionné entre une position ouverte et une position fermée.

11. Modules de vanne (1) selon la revendication 10, **caractérisés en ce que** les au moins deux troisièmes éléments de vanne (18_1, 18_2, 18_3, 18_4) présentent des surfaces de section transversale à ouverture libre différentes les unes des autres.

12. Module de vanne (1) selon l'une des revendications précédentes, **caractérisé en ce que** le premier raccord (11) et/ou le deuxième raccord (12) et/ou le troisième raccord (13) et/ou le quatrième raccord (14) peuvent respectivement être actionnés électriquement entre la position ouverte et la position fermée.

13. Module de vanne (1) selon l'une des revendications précédentes, **caractérisé en ce que** le premier raccord (11) est conçu en tant que première vanne (11) et/ou le deuxième raccord (12) en tant que deuxième vanne (12) et/ou le troisième raccord (13) en tant que troisième vanne (13) et/ou le quatrième raccord (14) en tant que quatrième vanne (14).

14. Module de vanne (1) selon la revendication 13, **caractérisé en ce que** la première vanne (11) et/ou la deuxième vanne (12) et/ou la troisième vanne (13) et/ou la quatrième vanne (14) sont conçues respectivement en tant que vannes proportionnelles et peuvent être réglées électriquement en continu entre la position ouverte et la position fermée.

15. Module de vanne (1) selon l'une des revendications précédentes, **caractérisé en ce que** le premier raccord (11) et/ou le deuxième raccord (12) et/ou le troisième raccord (13) et/ou le quatrième raccord (14) peuvent être réglés individuellement entre leurs positions ouvertes respectives et leurs positions fermées respectives.

16. Module de vanne (1) selon l'une des revendications précédentes, **caractérisé en ce que** le module de vanne (1) présente un séparateur liquide-vapeur (15) par l'intermédiaire duquel le premier raccord (11) et le deuxième raccord (12) sont reliés de manière fluidique avec le troisième raccord (13) et le quatrième raccord (14).

17. Module de vanne (1) selon l'une des revendications précédentes, **caractérisé par** les caractéristiques suivantes :
- le rapport d'une première surface de section transversale du premier raccord (11) à une deuxième surface de section transversale du deuxième raccord (12) est compris entre 0,64 et 41 ; et/ou
- le rapport d'une première surface de section transversale du premier raccord (11) à une quatrième surface de section transversale du quatrième raccord (14) est compris entre 1 et 7,3 ; et/ou
- le rapport d'une première surface de section transversale du premier raccord (11) à une troisième surface de section transversale du troisième raccord (13) est compris entre 0,5 et 4.

18. Système de récipient à liquide de service (100) destiné à un véhicule automobile comportant un moteur à combustion interne (40), présentant :
- un récipient à liquide de service (20), un tube de remplissage (22) servant à remplir l'espace intérieur de récipient à liquide de service (21) avec un liquide de service débouchant dans l'espace intérieur de récipient à liquide de service (21), le système de récipient à liquide de service (100) étant **caractérisé en ce qu'**il présente les caractéristiques suivantes :
- un module de vanne (1) selon l'une des revendications 1 à 17, dans lequel le premier raccord (11) est relié de manière fluidique à l'espace intérieur de récipient à liquide de service (21), le deuxième raccord (12) au tube de remplissage (22) et le troisième raccord (13) au moins indirectement à l'atmosphère.

19. Système de récipient à liquide de service (100) selon la revendication 18, **caractérisé en ce que** le système de récipient à liquide de service (100) présente un module de vanne (1) comportant les caractéristiques de la revendication 8, le quatrième raccord (14) étant relié de manière fluidique à une voie d'aspiration du moteur à combustion interne (40).

20. Système de récipient à liquide de service (100) selon la revendication 18 ou 19, **caractérisé par** les caractéristiques suivantes :
- le système de récipient à liquide de service (100) présente un filtre d'adsorption (30) servant à l'adsorption du liquide de service en phase vapeur ; et
- le troisième raccord (13) du module de vanne (1) est relié au filtre d'adsorption (30) de manière fluidique.

21. Système de récipient à liquide de service (100) selon l'une des revendications 18 à 20, **caractérisé par** les caractéristiques suivantes :
- le système de récipient à liquide de service (100) présente un module de vanne (1) comportant les caractéristiques de la revendication 7 ;
- le système de récipient à liquide de service (100) présente un élément de commande électronique qui est couplé au module de vanne (1) par l'intermédiaire d'une ligne de données pour l'échange de données ; et
- le premier dispositif de vanne (16) et le deuxième dispositif de vanne (17) peuvent être actionnés entre leurs positions ouvertes respectives et leurs positions fermées respectives au moyen de signaux de commande émis par l'élément de commande.

22. Système de récipient à liquide de service (100) selon l'une des revendications 18 à 21, **caractérisé par** les caractéristiques suivantes :
- le système de récipient à liquide de service (100) présente un module de vanne (1) comportant les caractéristiques de la revendication 12 ;
- le système de récipient à liquide de service (100) présente un élément de commande électronique qui est couplé au module de vanne (1) par l'intermédiaire d'une ligne de données pour l'échange de données ; et
- le premier raccord (11), le deuxième raccord (12), le troisième raccord (13) et le quatrième raccord (14) peuvent être actionnés entre leurs positions ouvertes respectives et leurs positions fermées respectives au moyen de signaux de commande émis par l'élément de commande.

23. Système de récipient à liquide de service (100) selon la revendication 21 ou 22, **caractérisé par** les caractéristiques suivantes :
- le système de récipient à liquide de service (100) présente au moins un capteur de niveau de remplissage servant à déterminer un niveau de remplissage du liquide de service dans le récipient à liquide de service (20) ; et
- l'élément de commande électronique est couplé au capteur de niveau de remplissage par l'intermédiaire d'une ligne de données pour recevoir des données.

24. Système de récipient à liquide de service (100) selon l'une des revendications 18 à 23, **caractérisé par** les caractéristiques suivantes :
- le système de récipient à liquide de service (100) présente une vanne de protection (19_1) contre la surpression, laquelle vanne de protection contre la surpression est disposée dans une conduite de fluide entre l'espace intérieur de récipient à liquide de service (21) et l'atmosphère ;
- la vanne de protection (19_1) contre la surpression est mobile entre une position ouverte, dans laquelle un échange de gaz est rendu possible par la vanne de protection (19_1) contre la surpression, et une position fermée, dans laquelle un échange de gaz est empêché par la vanne de protection (19_1) contre la surpression ;
- la vanne de protection (19_1) contre la surpression se trouve dans sa position fermée lorsque la pression interne dans l'espace intérieur de récipient à liquide de service (21) est inférieure à la pression maximale ; et
- la vanne de protection (19_1) contre la surpression est déplacée vers sa position ouverte lorsque la pression interne dans l'espace intérieur de récipient à liquide de service (21) est supérieure à la pression maximale.

25. Système de récipient à liquide de service (100) selon l'une des revendications 18 à 24, **caractérisé par** les caractéristiques suivantes :
- le système de récipient à liquide de service (100) présente une vanne de protection (19_2) contre la dépression qui est disposée dans une conduite de fluide entre l'espace intérieur de récipient à liquide de service (21) et l'atmosphère ;
- la vanne de protection (19_2) contre la dépression est mobile entre une position ouverte, dans laquelle un échange de gaz est rendu possible par la vanne de protection (19_2) contre la dépression, et une position fermée, dans laquelle un échange de gaz est empêché par la vanne de protection (19_2) contre la dépression ;
- la vanne de protection (19_2) contre la dépression se trouve dans sa position fermée lorsque la pression interne dans l'espace intérieur de récipient à liquide de service est supérieure à la pression minimale ; et
- la vanne de protection (19_2) contre la dépression est déplacée dans sa position ouverte lorsque la pression interne dans l'espace intérieur de récipient à liquide de service est inférieure à la pression minimale.
